# EUROPÄISCHE PATENTSCHRIFT

(11) **EP 3 195 434 B1**
(45) Veröffentlichungstag und Bekanntmachung des Hinweises auf die Patenterteilung: **16.06.2021**
(21) Anmeldenummer: 15763941.0
(22) Anmeldetag: 18.09.2015
(51) Int. Cl.: H02G 11/00, F16G 13/16

(54) **LEITUNGSFÜHRUNGSEINRICHTUNG, INSBESONDERE FÜR REINRAUMANWENDUNGEN, SCHALENTEILE UND STÜTZGERIPPE HIERFÜR**
LINE-GUIDING DEVICE, IN PARTICULAR FOR CLEAN ROOM APPLICATIONS, SHELL PARTS AND SUPPORTING SKELETON THEREFOR
DISPOSITIF DE GUIDAGE DE LIGNES, DESTINÉ EN PARTICULIER À DES APPLICATIONS EN SALLE BLANCHE, ÉLÉMENTS DE COQUE, ET CARCASSE DE SUPPORT AFFÉRENTE

(30) Priorität: 18.09.2014 DE 202014104458 U; 02.04.2015 DE 202015101688 U
(43) Veröffentlichungstag der Anmeldung: 26.07.2017
(60) Teilanmeldung: 20203219.9
(73) Patentinhaber: Igus GmbH, 51147 Köln (DE)
(72) Erfinder: BARTEN, Dominik, 53340 Meckenheim (DE); HERMEY, Andreas, 53773 Hennef (DE); JAEKER, Thilo-Alexander, 53757 Sankt Augustin (DE)
(74) Vertreter: Lippert Stachow Patentanwälte Rechtsanwälte
(86) Internationale Anmeldenummer: PCT/EP2015/071449
(87) Internationale Veröffentlichungsnummer: WO 2016/042134

(56) Entgegenhaltungen:
- EP-A1- 1 291 996
- EP-A2- 1 152 510
- WO-A1-01/48885
- WO-A1-2005/071284
- DE-A1- 3 016 628
- DE-A1- 10 104 846
- DE-A1-102013 105 427
- DE-U1-202013 101 203
- GB-A- 2 141 091
- JP-A- 2002 281 627
- JP-A- 2007 252 060
- JP-A- 2009 254 218
- US-A- 3 060 972

## Beschreibung

Die Erfindung betrifft eine Leitungsführungseinrichtung für Leitungen wie beispielsweise Kabel, Schläuche oder dergleichen, welche ein erstes Ende zum Befestigen an einer feststehenden Anschlussstelle und ein zweites Ende zum Befestigen an einer dazu relativ beweglichen weiteren Anschlussstelle aufweist. Zwischen ihren Enden bildet die Leitungsführungseinrichtung ein Obertrum, einen verfahrbaren Umlenkbogen und ein Untertrum. Der Umlenkbogen ist um eine Umlenkachse gekrümmt bzw. verschwenkt, vorzugsweise mit vorgegebenem Krümmungsradius, und typischerweise in der Ebene senkrecht zur Umlenkachse verfahrbar.

Das Patent US 5,069,486 A bzw. EP 0 197 546 B1 beschreibt eine Energieführungskette für dreidimensionale Bewegungen, z.B. an einem Roboter. Hierbei können einzelne Glieder aus Schalenteilen zusammengesetzt werden. Sie greifen unter Bildung einer Kugelgelenkverbindung ineinander. In den Gelenken können besondere Dichtungen vorliegen, welche die geführten Leitungen z.B. vor Feuchtigkeit schützen. Eine solche Kette vermeidet jedoch nicht das Freisetzen von Abriebpartikeln, die durch aneinanderreiben der benachbarten Glieder entstehen.

Im Betrieb einer Leitungsführungseinrichtung entsteht mit der Zeit meist unvermeidbar Abrieb, d.h. es entstehen kleine Partikel bedingt durch Reibung zwischen den Leitungen und/oder den Bestandteilen der Leitungsführungseinrichtung.

Die Erfindung betrifft insbesondere eine Leitungsführungseinrichtung für solche Anwendungen, in welchen Abrieb nicht freigesetzt werden soll. Dies ist beispielsweise in einer Reinraumanwendung der Fall.

Das Patent US 6,773,297 B1 bzw. EP 1 319 865 B1 beschreibt Zusatz- bzw. Zwischenrahmen, welche einzeln um die Gelenkverbindungen einer herkömmlichen Energieführungskette angebracht werden und gegen Austritt von Abrieb wirken. Auch dies ist aufwendig in Herstellung und späterer Handhabung. Anders als die Lösung aus US 2012 205 498 A1 kann dieser Ansatz die Entstehung von Abrieb nicht verringern.

Aus dem Gebrauchsmuster DE 20 2013 101 203 U1 ist eine gattungsgemäße Leitungsführungseinrichtung vorbekannt, welche eine biegsame Umhüllung (Engl. sheath) in der Art eines Wellschlauchs aufweist. Diese wellschlauchartige (Engl. corrugated) Umhüllung (Engl. envelope) umgibt den Innenraum der Leitungsführungseinrichtung staubdicht, sowohl in Längsrichtung zwischen den beiden Enden, als auch in der Umfangsrichtung. Durch die staubdichte Umhüllung wird auf einfache aber effektive Weise das unerwünschte Austreten von Abriebpartikeln verhindert.

Ein wesentlicher Vorteil der Lösung gemäß DE202013101203U1 liegt darin, dass die Umhüllung an sich bekannte Energieführungsketten als Leitungsführung nachrüsten kann, d.h. es sind insofern keine aufwendigen Sonderkonstruktionen zum Schutz der Leitungen nötig.

In diesem Zusammenhang ist es auch bereits bekannt, sogenannte Kabelschutzschläuche als gattungsgemäße Leitungsführungseinrichtung einzusetzen. Diese kommen in der Regel dann zum Einsatz, wenn die mechanische Beanspruchung der Leitungsführungseinrichtung relativ gering ausfällt. So beschreibt beispielsweise die Offenlegungsschrift DE 10 2012 000 798 A1 einen solchen Kabelschutzschlauch mit etwa rechteckigem Querschnitt, wobei eine zusätzliche Vorrichtung zur Aufteilung des Innenraums in mehrere Schlauchbereiche für die verschiedenen Leitungen vorgesehen ist. Diese Vorrichtung weist einen langgestreckten, biegsamen Träger sowie davon radial abstehende Trennrippen auf. In einem Ausführungsbeispiel ist vorgesehen, dass Eingriffselemente an den Trennrippen von innen in Wellentäler des Schutzschlauchs eingreifen und dadurch ein Abknicken verhindern. Nachteilig bei der Lösung aus DE102012000798A1 ist zunächst der für die Herstellung erforderliche Aufwand. Andererseits können mit dieser Lösung große freitragende Längen, z.B. des Obertrums, allenfalls mit zusätzlichen Hilfsmitteln realisiert werden.

Eine andere staubdichte Leitungsführungseinrichtung ist bereits aus der internationalen Patentanmeldung WO 2005/071284 A1 bzw. dem Patent US 7,784,259 B2 vorbekannt. Hierbei handelt es sich um einen monolithischen, im Extrusionsverfahren hergestellten, schlauchartigen Mantel. Eine Seite ist hierbei in Umfangsrichtung flexibler gestaltet, als die andere Seite. So kann die eine Seite in Umfangsrichtung über die andere Seite gebogen werden zum Schließen des Mantels. Diese Bauweise erlaubt ebenfalls nur relativ geringe freitragende Längen.

Ein diesbezüglich weiterführender Ansatz ist aus der Offenlegungsschrift DE 10 2012 100 290 A1 bzw. der U.S. Patentanmeldung US 2012 205 498 A1 bekannt. Diese offenbart eine gelenkige Schutz- und Führungsvorrichtung für Kabel und dergleichen, welche ebenfalls das Freisetzen von durch Abrieb entstandenem Feinstaub vermeiden soll. Hierzu wird ebenfalls ein flexibles, schlauchartiges Umhüllungselement vorgesehen, jedoch mit einer Vielzahl von rohrförmigen einzelnen Aufnahmekanälen, um die Leitungen getrennt voneinander zu führen. Zu beiden Seiten der schlauchartigen Umhüllung ist jeweils eine aus Gliedern gelenkig zusammengesetzte Stützkette vorgesehen, welche den Krümmungsradius des Umlenkbogens begrenzt und andererseits ein Durchbiegen im freitragenden Obertrum verhindert. Diese Lösung verbindet, wie die Leitungsführungseinrichtung aus DE202013101203U1, die Vorteile herkömmlicher Energieführungsketten hinsichtlich mechanischer Belastung und freitragender Längen mit einem auch für kritische Anwendungen geeigneten Schutz gegen Austreten von Abriebpartikeln. Die Lösung gemäß DE102012100290A1 ist jedoch aufwendiger in der Herstellung, da für die Stützketten eine Sonderanfertigung aus speziellen Kunststoffgliedern eingesetzt wird. Ein weiterer Nachteil der Lösung gemäß DE102012100290A1 liegt darin, dass eine Reparatur einer einzelnen Leitung oder einer Stützkette nur nach vollständigem Abbau der Leitungsführungseinrichtung möglich ist. Man kann das einteilig extrudierte Band- bzw. Umhüllungselement nach DE102012100290A1 nicht abschnittsweise öffnen.

Die eingangs genannte Leitungsführungseinrichtung aus DE202013101203U1 bildet demnach einen Ausgangspunkt der vorliegenden Erfindungen.

Schließlich beschreibt die Offenlegungsschrift EP 1 291 996 A1 eine Leitungsführungseinrichtung gemäß dem Oberbegriff aus Anspruch 1. Es handelt sich um eine wellschlauchartige einteilige Umhüllung, welche mit einer Vielzahl zweiteiliger Anbauteile ausgerüstet wird, die Anschläge bilden um ein asymmetrisches Biegeverhalten zu erzielen, nämlich in Bezug auf die gewünschte Krümmung um die Umlenkachse und auf die grundsätzlich unerwünschte, entgegengesetzte Krümmung. Die Herstellung der Lösung gemäß EP 1 291 996 A1 erfordert beachtlichen Arbeitsaufwand, u.a. aufgrund der Vielzahl Einzelteile.

### A) GRUPPE VON ERFINDUNGEN:

Eine erste Aufgabe der Erfindung ist es mithin, eine Leitungsführungseinrichtung vorzuschlagen, welche einen guten Schutz gegen unerwünschtes Austreten von abriebbedingten Partikeln bietet und sich im Vergleich zum Stand der Technik mit weniger Aufwand herstellen lässt.

Diese Aufgabe wird bei zum Teil dadurch gelöst, dass die Umhüllung in der Art eines Wellschlauchs ausgeführt ist und ein Wellprofil (Engl. corrugated profile) aufweist, welches die Biegsamkeit zumindest unterstützt, und dass die staubdichte Umhüllung ein asymmetrisches Biegeverhalten in Bezug auf die gewünschte Krümmung um die Umlenkachse und auf die grundsätzlich unerwünschte, entgegengesetzte Krümmung aufweist. Die Asymmetrie ist derart, dass die zugelassene Durchbiegung eines freitragenden Bereichs im Vergleich zur gewünschten Krümmung, d.h. der Krümmung im Umlenkbogen, erheblich geringer ist. Diese Asymmetrie kann in der Umhüllung inhärent sein oder durch zusätzliche Mittel, insbesondere Anbauteile, erreicht oder verstärkt werden.

Die gewünschte Krümmung um die Umlenkachse bzw. Krümmung nach innen wird zur Vereinfachung vorliegend als "konkave" Krümmung, die unerwünschte, entgegengesetzte Krümmung bzw. Krümmung nach außen als "konvexe" Krümmung bezeichnet.

Ein asymmetrisches Biegeverhalten kann insbesondere dadurch erreicht werden, dass die Umhüllung radial außen bzw. an der Außenseite ihres Umfangs - bezogen auf die Umlenkachse - eine geringere, insbesondere axiale Stauchbarkeit aufweist als radial innen bzw. an der Innenseite ihres Umfangs, d.h. dass die Außenseite insbesondere in Längsrichtung der Umhüllung in geringerem Maße stauchbar ist.

Die wellschlauchartige Gestalt der Umhüllung kann grundsätzlich beliebiger Art sein, sofern diese die nötige Flexibilität gewährleistet. Typischerweise weist die Umhüllung hierzu Wellenberge und Wellentäler bzw. Ein- und Ausbuchtungen auf, d.h. ein gewelltes Profil (Engl. corrugated profile), im Längsschnitt betrachtet. Eine Vielzahl verschiedener Profile sind hierbei möglich, beispielsweise ein kurviges Profil, z.B. ein näherungsweise sinuswellenförmiges Profil, ein kantiges Profil, z.B. ein Rechteckprofil, eine Mischform mit gerundeten Kanten, usw. Auch der Querschnitt der Umhüllung ist nicht entscheidend, so kommen kreisrunde, langlochförmige oder etwa rechteckige Querschnitte usw. in Betracht.

Für die nachfolgenden Aspekte der Erfindung ausschlaggebender ist hingegen, dass das Biegeverhalten zumindest in der Ebene, in welcher Obertrum, Untertrum und Umlenkbogen verlaufen, d.h. die Ebene, in welcher der Umlenkbogen verfahrbar ist, ein asymmetrisches Biegeverhalten, insbesondere eine je nach Biegerichtung unterschiedlich starke Biegsamkeit, aufweist. Mit anderen Worten, im betrachteten Abschnitt ist die Biegsamkeit bei gleich starkem Biegemoment in vorbestimmter Weise vom Drehsinn des Biegemoments abhängig.

Auf diese Weise wird erreicht, dass die Umhüllung selbst, d.h. auch ohne Verwendung einer herkömmlichen Energieführungskette oder besonderen Stützkette, im freitragenden Bereich eine hinreichende Stützfunktion gewährleistet. Zudem wird erreicht, dass die Umhüllung selbst die Leitungen führen und tragen kann. Demnach kann eine Stützkette oder typische Energieführungskette komplett entfallen. Anders ausgedrückt, im Vergleich zur DE202013101203U1 übernimmt bei einer erfindungsgemäßen Leitungsführungseinrichtung die zunächst zur Abdichtung gegen Staub vorgesehene Umhüllung zugleich wesentliche Funktionen herkömmlicher Energieführungsketten. Die Umhüllung für sich genommen kann zur Begrenzung des Krümmungsradius im Umlenkbogen einerseits, aber auch hinsichtlich der Vermeidung übermäßiger Durchbiegung im Obertrum und/oder im Untertrum ausgebildet sein. Mit anderen Worten, die Umhüllung selbst kann ggf. mit Anbauteilen für beide Fälle einen unterschiedlichen Minimalradius der Krümmung bzw. Biegung gewährleisten.

Die Umhüllung ist demnach für sich genommen bevorzugt nicht nur selbsttragend, sondern auch als Träger für die Leitungen ausgeführt. Leitungen können demnach unmittelbar in der Umhüllung geführt sein, ohne zusätzliche Vorrichtung zur Aufnahme der Leitungen. Alle Wirkungs- und Gestaltungsangaben betreffend die Umhüllung, insbesondere Form- und Maßangaben beziehen sich vorliegend, soweit nichts anderes ersichtlich ist, auf den Ruhezustand bzw. den belastungsfreien Zustand der Umhüllung. Die Durchbiegung bezieht sich vorliegend, sofern nicht anders angegeben, auf die Biegung in Strecklage mit einer nominellen Leitungsladung, aber ohne sonstige Last bzw. ohne Überlast. Staubdicht bedeutet im vorliegenden Zusammenhang nicht zwingend hermetisch gasdicht bzw. so verschlossen, dass nichts eindringen oder austreten kann. Staubdicht bedeutet vielmehr technisch dicht gegen ein Austreten von Abriebpartikeln typischer Korngrößen, die bei herkömmlichen Energieführungsketten durch Reibung der Kettenglieder oder der Leitungen aneinander entstehen.

Die Anwendung der Erfindung ist jedoch nicht auf Reinraumanwendungen beschränkt. Aufgrund der inhärenten Biegsamkeit können Gelenkverbindungen mit Reibung vermieden werden. Die Umhüllung ist aufgrund der asymmetrischen Biegsamkeit und der einhergehenden geringeren Durchbiegung zumindest für kurze freitragende Längen geeignet.

Asymmetrisches Biegeverhalten liegt im Sinne der Erfindung zumindest über einen Längsabschnitt der Leitungsführungseinrichtung vor. Die Biegsamkeit kann ggf. auch abschnittsweise unterschiedlich asymmetrisch und/oder symmetrisch sein. Insbesondere liegt auch eine über die Länge variierende Biegsamkeit im Rahmen der Erfindung. Analog wird in den einzelnen Abschnitten jeweils ein im Wesentlichen in einer Ebene liegender Verlauf realisiert, wobei sich Ebenen auch abschnittsweise unterscheiden können, und z.B. senkrecht zueinander liegen können. In bevorzugter Ausführung gestattet die wellschlauchartige Umhüllung auch bei vollständiger Befüllung mit Leitungen - im Vergleich zur gewünschten konkaven Krümmung - nur eine sehr geringe oder im Wesentlichen keine konvexe Krümmung, d.h. nur sehr geringe oder im Wesentlichen keine Durchbiegung. So kann ein optimaler, etwa geradliniger Verlauf des Obertrums gewährleistet werden. Im unbelasteten Zustand kann die Umhüllung zu diesem Zweck eine leichte konkave Vorkrümmung bzw. Vorspannung aufweisen.

Ein asymmetrisches, richtungsabhängiges Biegeverhalten kann z.B. dadurch erzielt werden, dass die Umhüllung aus mindestens zwei unterschiedlichen Materialen, insbesondere Kunststoffen mit unterschiedlicher Flexibilität, hergestellt wird. Eine geeignete Materialverteilung über den Querschnitt kann bereits das gewünschte Verhalten gewährleisten.

Die beiden nachfolgenden Aspekte beruhen jeweils auf dem vorstehend erläuterten der ersten Gruppe gemeinsamen Konzept.

### A) 1) ERSTER ASPEKT ("e-skin"):

Gemäß einem ersten Aspekt der Erfindung wird nach Anspruch 1 bzw. Anspruch 7 in einer besonders einfachen Ausführungsform das asymmetrische Biegeverhalten zumindest überwiegend oder ausschließlich dadurch erzielt, dass die wellschlauchartige Umhüllung an der Außenseite ihres Umfangs ein anderes gewelltes Profil aufweist als an der Innenseite ihres Umfangs. Durch verschiedenartige Profilgestaltung an den beiden Seiten kann das gewünschte Krümmungsverhalten der Umhüllung an sich vordefiniert bzw. vorgegeben werden. Demnach sind hierfür keine zusätzlichen Bauteile, wie bspw. Stütz- oder Führungsketten, erforderlich. Die verschiedenartigen Profile an den beiden Seiten der Umhüllung können neben der richtungsabhängigen Biegsamkeit insbesondere auch eine Verschwenk- bzw. Krümmungsebene der Umhüllung vorgeben. Zudem kann die Profilgestaltung, insbesondere an der Außenseite, so gewählt sein, dass eines der beiden gewellten Profile höhere Schub- und Druckfestigkeit aufweist als das andere Profil. Die verschiedenen Profile können aus dem gleichen oder aus unterschiedlichem Material hergestellt sein.

In einer bevorzugten Ausführung mit unterschiedlichen Profilen, welche u.a. nur geringe oder keine Stauchung in Längsrichtung an der Außenseite zulässt, hat die wellschlauchartige Umhüllung an der Außenseite ein Profil mit Wellentälern, deren lichte axiale Breite weniger als 20%, insbesondere weniger als 10%, der axialen Breite der Wellenberge beträgt. So steht nur sehr wenig Freiraum für ein Stauchen an der Außenseite zur Verfügung. Ein Stauchen der Wellenberge selbst kann wiederum durch deren Gestaltung reduziert oder verhindert werden.

In einer vorteilhaften Ausführungsform hat das gewellte Profil der Außenseite bzw. radial außen eine Omega-Form im Längsschnitt. Hierbei weisen Wellenberge zu den Enden hin ausgebauchte Flanken auf. Das Profil ist so gestaltet, dass diese Flanken in Strecklage der Umhüllung, insbesondere im freitragenden Obertrum, beidseitig miteinander im Anschlag stehen.

In bevorzugter Ausführung mit verschiedenartiger Profilierung an der Innen- und Außenseite hat die wellschlauchartige Umhüllung an ihrer Innenseite ein Wellprofil mit Wellentälern, deren lichte axiale Breite mindestens 50% der axialen Breite der Wellenberge beträgt, und insbesondere in etwa gleich groß ist. So kann an der Innenseite insbesondere ein an sich bekanntes, erprobtes Profil vorgesehen werden.

Verschiedenartige Profile an den beiden Seiten der Umhüllung können insbesondere in Kunststoff, durch geeignete Verfahren der KunststoffTechnik, auch bei abschnittsweisen oder über die gesamte Länge einstückigen Umhüllungen realisiert werden. Einstückige Umhüllungen sind von sich aus staubdicht.

Eine im Krümmungsradius leichter variable und einfache Herstellung der wellschlauchartigen Umhüllung wird ermöglicht, wenn diese abschnittsweise in modularer Bauweise, jeweils aus zwei Schalenteilen mit unterschiedlichen Profilen zusammengesetzt ist. So können z.B. innenseitige Schalenteile mit verschiedenen, vorgegebenen Krümmungsradien, mit einem außenseitigen Schalenteil, welches Durchbiegung vermeidet, kombiniert werden. Die Schnittstelle, an welcher beide Schalenteile verbunden sind, liegt hierbei vorzugsweise auf Höhe der neutralen Faser der Leitungsführungseinrichtung, wo durch minimale Relativbewegung eine staubdichte Verbindung der Teile vereinfacht wird.

Separat hergestellte Schalenteile können auch ohne besonderen Aufwand aus verschiedenem Material gefertigt werden.

Ein Aufbau der Umhüllung mit Abschnitten aus zwei Schalenteilen ermöglicht ferner, dass mindestens ein Schalenteil, vorzugsweise das außenseitige Schalenteil, einen oder mehrere angeformte Trennstege aufweist, welche den Innenraum im Querschnitt aufteilen. Durch die Aufteilung in einen jeweiligen Kanalbereich für jede Leitung wird Abrieb durch Reibung zwischen den Leitungen minimiert oder vermieden.

Die Leitungsführungseinrichtung gemäß dem ersten Aspekt ist besonders leicht, hat einen geräusch- und vibrationsarmen Lauf, ist wartungsarm und lässt sich relativ preiswert herstellen. Entsprechend kann sie in einer Vielzahl Anwendungen eingesetzt werden.

Der erste Aspekt betrifft schließlich auch das Schalenteil zur Herstellung einer Leitungsführungseinrichtung gemäß einer der o.g. Ausführungsformen. Das Schalenteil hierzu kann einstückig aus flexiblem Kunststoff hergestellt sein und im Längsschnitt ein Wellprofil aufweisen mit asymmetrischem Biegeverhalten in Bezug auf eine Krümmung um eine Umlenkachse und auf eine entgegengesetzte Biegung. Das Wellprofil ist im Sinne der Erfindung derart gewählt, dass die zugelassene Biegung im Vergleich zur gewünschten Krümmung erheblich geringer ist. Dies kann insbesondere ein Wellprofil in Omega-Form bewirken, mit Wellenbergen, die zu den Enden hin ausgebauchte Flanken aufweisen, und wobei das Wellprofil so gestaltet ist, dass diese Flanken in Strecklage, d.h. in einem freitragenden Bereich, beidseitig miteinander im Anschlag stehen.

### A) 2) ZWEITER ASPEKT ("e-rib"):

Gemäß einem zweiten, hier nicht als erfindungsgemäß beanspruchten, Aspekt kann alternativ oder ergänzend zum ersten Aspekt zur Bestimmung des Krümmungsverhaltens bzw. zur Erzielung oder Verstärkung asymmetrischer Flexibilität ein von außen angebrachtes, separates Stützgerippe (Engl. "supporting skeleton") mit in Umfangsrichtung verlaufenden Querrippen vorgesehen werden. Mit diesem Ansatz kann die Umhüllung insbesondere als herkömmlicher Wellschlauch mit an sich symmetrischem bzw. richtungsunabhängigem Biegeverhalten ausgeführt sein. Zusammen mit dem Stützgerippe als Anbauteil bildet der Wellschlauch mit herkömmlicher Profilierung dann die Umhüllung.

In einer ersten Ausführungsform des zweiten Aspekts hat die Umhüllung ein von außen angebrachtes, separates Stützgerippe mit in Umfangsrichtung verlaufenden Querrippen, welche an einer Außenseite in Längsrichtung vorstehende Vorsprünge als Anschläge gegen Durchbiegung umfassen. Die Vorsprünge sind dabei derart ausgeführt, dass die Querrippen aufgrund der Vorsprünge in einer gestreckten bzw. freitragenden Lage der Umhüllung miteinander im Anschlag stehen. Vorzugsweise sind, insbesondere an jeder Querrippe, jeweils beidseitig zwei zueinander konjugiert geformte Vorsprünge vorgesehen. Die Vorsprünge benachbarter Querrippen können dabei zusammenwirken, insbesondere zentrierend zusammenwirken, um die Länge und auch die Seitenstabilität des freitragenden Teils, insbesondere des Obertrums, zu erhöhen. Diese Lösung hat den Vorteil, dass sie mit herkömmlichem Wellschlauch verschiedener Durchmesser innerhalb eines Nominalbereichs kompatibel ist. In einer Weiterbildung kann vorgesehen sein, dass das Stützgerippe beidseitig in Umfangsrichtung vorstehende, biegsame Haltearme aufweist. Diese erlauben es, das Stützgerippe außenseitig an der Umhüllung, ähnlich wie bei Klammern bzw. offenen Klemmschellen zu halten.

In einer zweiten Ausführungsform des zweiten Aspekts, d.h. mit einem Stützgerippe als separaten, an der Umhüllung angebrachtes Bauteil, können die die Querrippen von außen bzw. an der Außenseite in das Wellprofil (Engl. corrugated profile) der wellschlauchartigen Umhüllung eingreifen. So bilden die z.B. über den halben Umfang eingreifenden Querrippen zusammen mit den Wellenbergen gemeinsam eine Versteifung gegen Durchbiegen, da die Wellentäler belegt sind.

Das Stützgerippe zur Erzielung asymmetrischer Flexibilität kann in einer alternativen, dritten Ausführungsform des zweiten Aspekts auch im Innenraum angebracht werden, d.h. mit Querrippen, welche von innen bzw. an der Innenseite in das Wellprofil eingreifen. Die Anordnung innen ist aufwendiger, vermeidet jedoch inhärent auch theoretisch möglichen Abrieb zwischen Stützgerippe und Umhüllung.

Durch die Querrippen des separaten Stützgerippes in der zweiten und dritten Ausführungsform des zweiten Aspekts kann insbesondere auf einfache Weise die lichte Axialbreite bzw. der Freiraum zwischen Wellenbergen und/oder Wellentälern an der Außenseite, bezogen auf den Umlenkbogen, gegenüber dem entsprechenden Freiraum zwischen Wellenbergen und/oder Wellentälern an der Innenseite reduziert werden. Ferner kann auch die Krümmungsebene und/oder der Krümmungsradius durch die Gestaltung des Stützgerippes vorgegeben werden.

Vorzugsweise ist das Stützgerippe in der zweiten bzw. dritten Ausführungsform so ausgeführt, dass in mindestens jede dritte Welle des Wellprofils, vorzugsweise in jede Welle des Wellprofils, eine entsprechende Querrippe eingreift. Auf diese Weise wird die axiale Stauchbarkeit der Außenseite erheblich reduziert.

Für die Bestimmung des Krümmungsverhaltens ist es bei allen Ausführungsformen vorteilhaft, wenn das Stützgerippe zwei gegenüberliegende und in Längsrichtung verlaufende Träger aufweist, welche die Querrippen tragen, wobei die Träger vorzugsweise auf Höhe der neutralen Faser der Leitungsführungseinrichtung liegen bzw. diese vorgeben, etwa bei einem herkömmlichen Wellschlauch als Umhüllung. Das Stützgerippe ist vorzugsweise einstückig hergestellt, insbesondere als Spritzgussteil aus Kunststoff. Entsprechende Träger können an beiden Enden mit den Anschlussstellen befestigt werden, um Zug- und Druckkräfte beim Verfahren des Umlenkbogens abzufangen und so die eigentliche Umhüllung zu entlasten. Demnach ist es vorteilhaft, wenn das Stützgerippe eine Längserstreckung aufweist, welche mindestens der Maximallänge des Obertrums entspricht, vorzugsweise der Gesamtlänge der Leitungsführungseinrichtung. Durch das Stützgerippe, insbesondere die Träger, kann eine Seitenstabilität gegen Biegung aus der Krümmungsebene erzielt werden.

Zur Anpassung der Aufnahmekapazität ist es vorteilhaft, wenn die Träger seitliche Befestigungsmittel aufweisen zur Verbindung mit dem Stützgerippe einer weiteren Umhüllung. So können mehrere Umhüllungen parallel aneinander befestigt werden, um eine Leitungsführungseinrichtung mit größerem Aufnahmeraum zu bilden.

Ferner können an den Trägern endseitige Befestigungsmittel vorgesehen werden zur Befestigung in Längsrichtung aufeinanderfolgender Stützgerippe und ggf. zur Übertragung von Zug- und Schubkräften.

Als Knickschutz, insbesondere für einen herkömmlichen Wellschlauch, ist es vorteilhaft, wenn das Stützgerippe, z.B. in Verlängerung der Querrippen quer zu den Trägern, beidseitig etwa keilförmige oder V-förmige, relativ kurze Fortsätze, Laschen oder Zungen aufweist, welche über ein geringes Umfangsmaß in das Wellprofil der Innenseite eingreifen, um durch den eingeschlossenen Winkel der Keil- bzw. V-Form einen minimalen Krümmungsradius des Umlenkbogens vorzugeben.

Zur Umsetzung ist es vorteilhaft, wenn eine geringere Stauchbarkeit, insbesondere in der Axial- bzw. Längsrichtung, im Querschnitt über einen Anteil des äußeren Umfangsbereichs realisiert ist, welcher mindestens 12,5%, vorzugsweise zwischen 25% und 50% des vollen Umfangsmaßes der Umhüllung beträgt. Ein geeignetes Profil bzw. Stützgerippe sollte demnach an der Außenseite über ein gewisses Winkel- oder Umfangsmaß des Querschnitts wirksam die Stauchbarkeit reduzieren.

Insbesondere bei Verwendung eines Stützgerippes ist es für die Bestimmung des Krümmungsverhaltens vorteilhaft, wenn das Wellprofil der Umhüllung parallel ringförmig gewellt, d.h. nicht wendelförmig bzw. schraubenförmig gewellt ist. Zweckmäßig werden die Umhüllung und gegebenenfalls auch das Stützgerippe aus einem biegsamen Kunststoff hergestellt, insbesondere aus einem elastischen und dauerbiegefesten Kunststoff, vorzugsweise einem Thermoplast.

Das vorgeschlagene Konzept ermöglicht es insbesondere, die statische konvexe Durchbiegung auf einen Radius zu begrenzen, welcher um ein Vielfaches, insbesondere um mindestens das 10-fache größer ist, als der statische Biegeradius der wellschlauchartigen Umhüllung bei konkaver Krümmung. Unter statischem Biegeradius wird hierbei der minimale Radius im Ruhezustand (ohne Verfahrbewegung) verstanden, bei welchem die Grenze plastischer Deformation erreicht wird.

Als relevant wird für den zweiten Aspekt auch ein Modul zum modularen Aufbau eines Stützgerippes bzw. ein Stützgerippen-Modul beschrieben. Es dient zusammen mit einer Umhüllung umfassend einen Wellschlauch mit Wellprofil zum Herstellen einer Leitungsführungseinrichtung für Leitungen, insbesondere nach der ersten und zweiten Ausführungsform des zweiten Aspekts. Dabei ist ein Stützgerippen-Modul einstückig aus flexiblem Kunststoff hergestellt, hat eine Längserstreckung und ist so gestaltet, dass es von außen an einem Wellschlauch angebracht werden kann. Es hat ferner eine Vielzahl in eine Umfangsrichtung, d.h. quer zur Längserstreckung verlaufende Querrippen. Je nach Ausführungsform hat es Querrippen, die zumindest teilweise in das Wellprofil des Wellschlauchs eingreifen können oder Querrippen, die in Längsrichtung vorstehende Vorsprünge umfassen derart, dass die Querrippen in einer gestreckten bzw. freitragenden Lage miteinander im Anschlag stehen, im Sinne der entsprechenden Beschreibung weiter oben. Das Modul kann ferner alle oder einige der vorgenannten weiteren Merkmale des Stützgerippes aufweisen, insbesondere Träger, seitliche und/oder endseitige Befestigungsmittel zur Erweiterung bzw. modularen Verlängerung, Haltearme usw.

Die Verwendung eines Stützgerippes nach dem zweiten Aspekt ist insbesondere für kleine Radien im Umlenkbereich vorteilhaft, da hier ein besonders weichelastisches Material der Umhüllung wünschenswert ist. Letzteres steht einer geringen Durchbiegung im freitragenden Bereich entgegen. Je nach Anwendung kann ein Stützgerippe auch mit einer Profilgestaltung nach dem ersten Aspekt kombiniert werden.

### A) 3) DRITTER ASPEKT ("e-skin zipper"):

Ein weiterer Aspekt zur ersten Erfindungsgruppe betrifft die Festigkeit und Dichtwirkung gegen Staubpartikel der Verbindung zum Zusammenbau der einzelnen Schalenteile, wobei insbesondere eine Verbesserung gegenüber der Lehre aus DE 20 2014 104458 U1 erzielt werden kann.

Es wird hierzu gemäß Anspruch 8 ein wellschlauchartiges Schalenteil für eine Leitungsführungseinrichtung vorgeschlagen, welche durch eine wellschlauchartige Umhüllung gebildet ist, die jeweils abschnittsweise aus zwei Schalenteilen, insbesondere aus zwei Schalenteilen mit unterschiedlichen Profilen, zusammengesetzt ist.

Grundsätzlich können die Schalenteile an der Schnittstelle in Längsrichtung auf verschiedene Arten verbunden werden, z.B. nach der Herstellung unlösbar durch Klebe- oder Schweißtechnik, insbesondere eine für Kunststoffe geeignete Verbindungstechnik wie z.B. Ultraschallschweißung. Eine zerstörungsfrei lösbare und dennoch hinreichend feste Verbindung wird jedoch bevorzugt, insbesondere um ein nachträgliches Öffnen der Umhüllung zu ermöglichen.

Gemäß einem dritten, weiteren Aspekt der Erfindung wird daher vorgeschlagen, dass das Schalenteil an beiden Längsseiten ein in Längsrichtung verlaufendes, insbesondere durchgehendes Befestigungsband hat, welches eine Verzahnung aufweist, vorzugsweise mit regelmäßig angeordneten Krampen (Engl. teeth) bzw. Zähnen, die mit einer entsprechenden Verzahnung an einem gegenüberliegenden Schalenteil in der Art eines Reißverschlusses (Engl. zip fastener) zusammenwirken. So wird eine gute, im Betrieb fest verschlossene Verbindung der gegenüberliegenden Schalenteile sichergestellt. Wie bereits beim ersten Aspekt, kann u.a. durch die Befestigungsbänder, aber auch einen länglichen Querschnitt und eine quersteife Gestaltung der Schalenteile eine gute Seitenstabilität erzielt werden.

Die Krampen der ähnlich einem Reiß- bzw. Zippverschluss wirkenden Verbinder können insbesondere einen Wirkungsquerschnitt haben, der zumindest annähernd der Form eines gleichschenkligen Trapezes entspricht. Der wirksame Querschnitt kann z.B. der eines gleichschenkligen Trapezes mit Abrundungen in den Eckbereichen sein. Dabei kann vorgesehen sein, dass eine schmale Seite eines trapezförmigen Krampen von dem zu verbindenden Schalenteil abgewandt ist und zulaufende Schenkel der trapezförmigen Krampen von jeweils zwei verbundenen Teilen miteinander verkeilen.

Die keil- bzw. trapezförmige Gestaltung erlaubt insbesondere ein Befestigen bzw. Öffnen der gegenüberliegenden Schalenteile in etwa senkrecht zur Längsrichtung. Die Krampen können insbesondere Vorsprünge in Verlängerung des Bandes seitlich nach außen bilden, besonders in Richtung senkrecht zur Längsrichtung des Schalenteils bzw. der Leitungsführungseinrichtung. Die Krampen können jeweils auch geringfügig in Richtung zum anderen Schalenteil hin vom Befestigungsband vorstehen.

Gemäß einem weiteren, unabhängigen Aspekt der Erfindung wird vorgeschlagen, dass ein Schalenteil eine Längsnut hat, welche mit einer entsprechenden Feder am zu verbindenden anderen Schalenteil formschlüssig zusammenwirkt. Entsprechend hat das andere Schalenteil, vorzugsweise im Bereich zwischen der Verzahnung und dem Übergang zur wellschlauchartigen Hülle, eine Feder, welche mit einer entsprechenden Längsnut am zu verbindenden Schalenteil formschlüssig zusammenwirkt. So kann die Abdichtung und auch die Befestigung der Schalenteile aneinander weiter verbessert werden.

Es kann vorgesehen werden, dass an einem stirnseitigen Endbereich ein senkrecht zur Längsachse gerichteter und umfänglich durchgehender Dichtvorsprung und am anderen stirnseitigen Endbereich eine innenliegende, entsprechend verlaufende Dichtnut vorgesehen ist, in welche der Dichtvorsprung des in Längsrichtung benachbarten form- und/oder kraftschlüssig eingreifen kann. So kann auch an den Stirnenden eine dichtende und feste Verbindung erzielt werden. Dies kann auch bei Schalenteilen nach dem ersten und ggf. zweiten Aspekt vorgesehen werden.

Hierbei kann der Dichtvorsprung mit einem zunächst zulaufenden und endseitig verdickten Querschnitt, der vorzugsweise einem Pilzkopf oder einem Spielstein ähnelt, ausgeführt sein.

Bei allen Umhüllungen aus Schalenteilen ist es vorteilhaft, wenn die Fügestelle zwischen den Befestigungsbändern die neutrale Faser der Leitungsführungseinrichtung bildet. Dadurch, dass die bei Krümmung eine konstante Abmessung in Längsrichtung erhaltende Schicht (=neutrale Faser) genau an der Schnittstelle liegt, wird u.a. eine feste Befestigung der Schalenteile aneinander ermöglicht, da ein Aufklaffen bei Biegung verhindert wird.

Alle vorgenannten Aspekte werden jeweils für sich genommen und unabhängig als erfinderisch angesehen und können demnach auch eigenständig voneinander in Teilanmeldungen beansprucht werden.

Schließlich können die Ausführungsformen vorteilhaft hinsichtlich Abdichtung gegen Austritt von Feinstaub so weitergebildet werden, dass am ersten und am zweiten Ende der Einrichtung jeweils ein Anschlussflansch zum staubdichten Abschluss der stirnseitig offenen Enden der Umhüllung vorgesehen ist. Eine hierzu bevorzugte Weiterbildung sieht vor, dass jeder Anschlussflansch zwei staubdicht verbindbare Klemmschalen umfasst, welche an einem vorderen Endbereich kraft- und/oder formschlüssig die Umhüllung halten und diese staubdicht umgeben. Bevorzugt hat der Anschlussflansch Befestigungsmittel zur Befestigung, insbesondere zur Schraubverbindung mit der jeweiligen Anschlussstelle. Besonders bevorzugt weisen beide Klemmschalen jedes Anschlussflansches derartige Befestigungsmittel auf, so dass diese mit der Befestigung an der Anschlussstelle zugleich aneinander gesichert werden.

In bevorzugter Ausführungsform hat jeder Anschlussflansch in einem Endbereich, vorzugsweise dem vorderen Endbereich gegenüberliegend, eine geeignete Durchführdichtung zur staubdichten Durchführung der Leitungen.

Weitere Einzelheiten, Vorteile und Merkmale der Erfindungen lassen sich der nachfolgenden Erläuterung bevorzugter Ausführungsbeispiele anhand der beigefügten Zeichnungen entnehmen. Hierbei zeigen:
- FIG.1:: ein Prinzipschema einer erfindungsgemäßen Leitungsführungseinrichtung in Seitenansicht;
- FIG.2A-2C:: einen Abschnitt eines ersten Ausführungsbeispiels einer Leitungsführungseinrichtung in perspektivischer Ansicht (FIG.2A), in einem vergrößerten Ausschnitt (FIG.2B) sowie im Längsschnitt parallel zur Krümmungs- bzw. Bewegungsebene des Umlenkbogens (FIG.2C);
- FIG.3A-3D:: einen Abschnitt eines zweiten Ausführungsbeispiels einer Leitungsführungseinrichtung in perspektivischer Ansicht (FIG.3A), in einem vergrößerten Ausschnitt (FIG.3B), im Längsschnitt parallel zur Krümmungs- bzw. Bewegungsebene des Umlenkbogens (FIG.3C) sowie im Querschnitt senkrecht zur Längsrichtung (FIG.3D);
- FIG.4A-4C:: einen Abschnitt eines dritten Ausführungsbeispiels einer erfindungsgemäßen Leitungsführungseinrichtung in perspektivischer Explosionsdarstellung (FIG.4A), in perspektivischer, zusammengesetzter Ansicht (FIG.4B) sowie in vergrößerter Seitenansicht (FIG.4C);
- FIG.5:: eine Variante des dritten Ausführungsbeispiels gemäß FIG.4A-4C mit mehreren Umhüllungen in einem vertikalen, die Innenseite des Umlenkbogens zeigenden Querschnitt;
- FIG.6A-6C:: ein weiteres, viertes Ausführungsbeispiel, bei welchem im Vergleich zum dritten Ausführungsbeispiel gemäß FIG.4A-4C ein Stützgerippe nicht außen, sondern innen an der Umhüllung vorgesehen ist;
- FIG.7A-7C:: ein Beispiel einer hier nicht als erfindungsgemäß beanspruchten Leitungsführungseinrichtung gemäß einer unabhängigen Erfindung in perspektivischer, teilweise aufgebrochener Ansicht des Umlenkbogens (FIG.7A), einer entsprechenden Seitenansicht (FIG.7B) sowie in einem vergrößerten Ausschnitt (FIG.7C);
- FIG.8A-8B:: eine bevorzugte Ausführungsform von Anschlussflanschen zur Befestigung der Enden einer Leitungsführungseinrichtung an der feststehenden bzw. beweglichen Anschlussstelle;
- FIG.9A-9C:: einen Modul-Abschnitt einer Alternativausführung eines Stützgerippes in perspektivischer Ansicht (FIG.9A), im Querschnitt (FIG.9B), sowie in vergrößerter Draufsicht auf Vorsprünge mit Anschlagfunktion (FIG.9C);
- FIG.10A-10C:: ein weiteres Ausführungsbeispiel eines Schalenteils für eine Umhüllung nach FIG.1-3 in einer Draufsicht der Innenseite (FIG.10A), einer teilweise aufgebrochenen Perspektivansicht der Umhüllung (FIG.10B) und einem Längsschnitt auf Höhe der Stirnenden (FIG.10C);
- FIG.11:: ein Prinzipschema einer Leitungsführungseinrichtung in Seitenansicht gemäß einem weiteren unabhängigen Aspekt der Erfindung;
- FIG.12:: eine Ansicht von zwei wellschlauchartigen Schalenteilen, welche gemäß einem weiteren unabhängigen Aspekt der Erfindung zu einem Abschnitt einer Leitungsführungseinrichtung, insbesondere nach FIG.1, verbunden werden;
- FIG.13:: eine Vergrößerung der seitlichen Befestigungsbänder der Schalenteile aus FIG.12 in verbundenem Zustand;
- FIG.14A:: eine Vorderansicht eines Abschnitts einer Leitungsführungseinrichtung nach FIG.11-13;
- FIG.14B:: eine Vergrößerung gemäß Bereich XIV-B in Fig.14A;
- FIG.15:: eine Seitenansicht der Schmalseite eines Abschnitts einer Leitungsführungseinrichtung nach FIG.11-14, mit in Längsrichtung versetz verbundenen Schalenteilen; und
- FIG.16:: einen Schnitt nach Linien XVI-XVI in FIG.14A der dichten Verbindung der Stirnenden benachbarter Schalenteile.

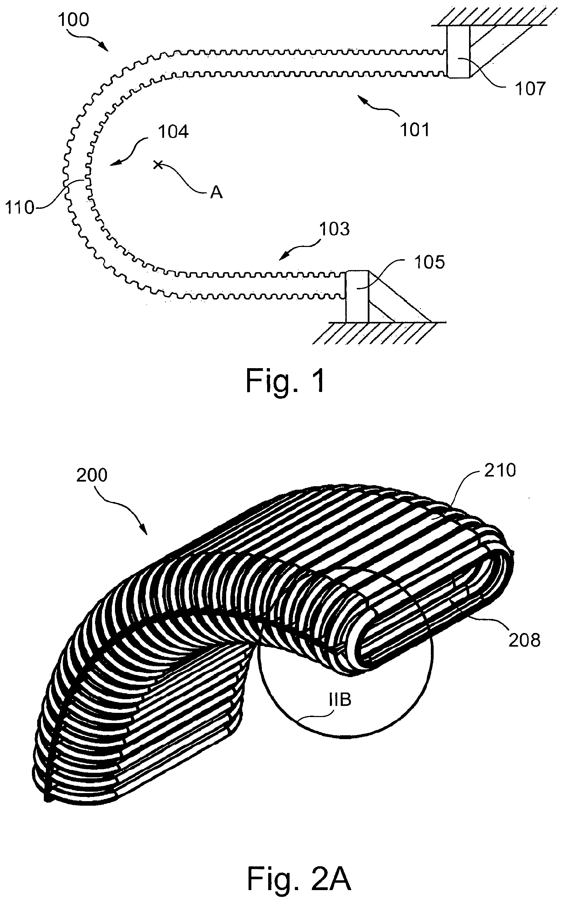

In FIG.1 ist eine schematisch gezeigte Leitungsführungseinrichtung allgemein mit 100 bezeichnet. Die Leitungsführungseinrichtung 100 dient zur geschützten Führung von Kabeln, Schläuchen oder ähnlichen Leitungen, welche in den Abbildungen nicht näher gezeigt sind. Zwischen einem Obertrum 101 und einem Untertrum 103 bildet die Leitungsführungseinrichtung 100 in bekannter Weise einen Umlenkbogen 104 mit vorgegebener Krümmung. Der Umlenkbogen 104 hat zur Vermeidung von Leitungsbrüchen insbesondere einen vorgegebenen, minimalen Krümmungsradius und gewährleistet damit, dass die zulässigen Krümmungsradien der geführten Leitungen nicht unterschritten werden.

Der Umlenkbogen 104 ist über eine Strecke relativ zum feststehenden Anschluss 105 zusammen mit dem beweglichen Anschluss 107 verfahrbar. Die Bewegung erfolgt im Wesentlichen in einer Ebene, welche hier etwa vertikal liegt, und folgt der Bewegung des beweglichen Anschlusses 107. Im gezeigten Beispiel liegt der feststehende Anschluss 105 am Obertrum 101 und der beweglichen Anschluss 107 am Untertrum 103. Die beiden Enden der Leitungsführungseinrichtung 100 können auch umgekehrt angeschlossen sein.

FIG.1 zeigt ferner schematisch als einen wesentlichen Aspekt der Erfindung eine biegsame Umhüllung 110, welche die im Innenraum geführten Leitungen in Umfangsrichtung und zwischen den beiden Anschlüssen 105, 107 durchgehend geschlossen und technisch staubdicht umgibt. Wie aus FIG.1 ersichtlich, ist die Umhüllung 110 schlauchartig und ausreichend flexibel ausgeführt, beispielsweise durch geeignete Gestaltung und/oder Materialwahl, um die fest vorgegebene Krümmung des Umlenkbogens 104 aufzunehmen und der Verfahrbewegung des Umlenkbogens 104 mit möglichst geringem Widerstand zu folgen.

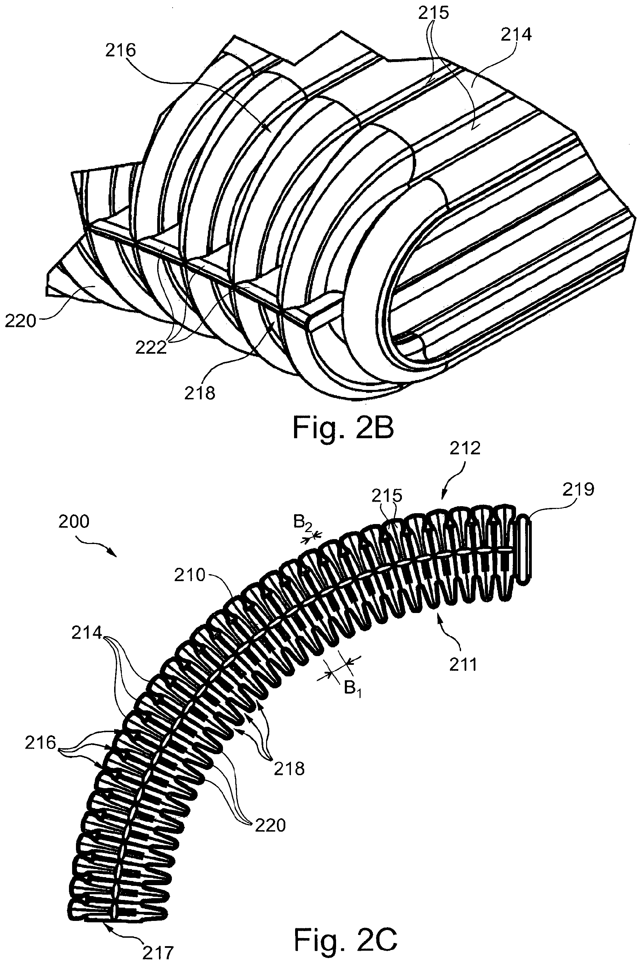

FIG.2A-2B zeigen ein erstes Ausführungsbeispiel einer erfindungsgemäßen Leitungsführungseinrichtung 200 mit einer Umhüllung 210. Die Umhüllung umgibt einen Innenraum 208 staubdicht, so dass Abriebpartikel nicht austreten können. Die Umhüllung 210 weist asymmetrisches Biegeverhalten in Bezug auf konkave und konvexe Krümmung um die Umlenkachse (schematisch mit A in FIG.1 angedeutet). Zu diesem Zweck weist die Umhüllung 210 an ihrer Innenseite 211 (d.h. der Breitseite radial innen) und ihrer Außenseite 212 (d.h. der Breitseite radial außen) wellschlauchartige aber jeweils verschiedenartige Profile auf. Wie FIG.2C veranschaulicht, hat das Profil an der Außenseite 212 Wellenberge 214, deren Form im Längsschnitt (FIG.2c) etwa Ω-förmig (Omega-förmig) gestaltet ist, so dass endseitig ausgebauchte Flanken 215 der Wellenberge 214 in Strecklage der Umhüllung 210 jeweils zu beiden Seiten der Wellenberge 214 miteinander im Anschlag stehen können. So kann in einfacher Weise erreicht werden, dass die Umhüllung 210 im Vergleich zur gewünschten konkaven Krümmung um die Umlenkachse A (vgl. FIG.1) nur geringe oder im Wesentlichen keine konvexe Durchbiegung in die andere Richtung gestattet. Die Umhüllung 210 selbst kann einen etwa gradlinigen Verlauf des Obertrums gewährleisten, auch wenn dieser mit dem Gewicht der geführten Leitungen (nicht gezeigt) belastet ist. Zur Verstärkung der Tragkraft des Profils an der Außenseite 212 ist ferner vorgesehen, dass an der Außenseite 212 die Wellentäler 216 zwischen den Wellenbergen 214 eine sehr geringe freie bzw. lichte axiale Breite B2 aufweisen, hier beispielsweise weniger als 20% der axialen Breite der Wellenberge 214 an der Außenseite 212. Die lichte axiale Breite B2 der Wellentäler 216 an der Außenseite 212 ist ferner deutlich geringer, als die entsprechende lichte axiale Breite B1 der Wellentäler 218 an der Innenseite 211.

Wie FIG.2C zeigt, kann die wellschlauchartige Umhüllung 210, im Längsschnitt durch den mittleren Bereich betrachtet, an der Innenseite 211 im Gegensatz zur Außenseite 212 ein herkömmliches Profil aufweisen, beispielsweise ein gerundetes Wellprofil (Engl. corrugated profile) mit Wellentälern 218 und Wellenbergen 220, deren größte Abmessung in Längsrichtung bzw. axiale Breite jeweils etwa gleich groß ist.

Im Ausführungsbeispiel gemäß FIG.2A-2C wird die Leitungsführungseinrichtung 200 abschnittsweise aus Teilstücken der Umhüllung 210, wie in FIG.2A gezeigt, zusammengesetzt. Jedes Teilstück ist in diesem Beispiel in Längsrichtung und in Umfangsrichtung einstückig, insbesondere aus Kunststoff, hergestellt. Zur Verbindung von zwei Teilstücken der Umhüllung 210 weisen diese jeweils an einem stirnseitigen Ende einen vollständig umlaufenden Verrastungsring 219 auf. Die Verrastungsring 219 können in das gegenüberliegende Ende 217 in der Art einer Feder-Nut-Verbindung formschlüssig einrasten. Jeder Verrastungsring 219 hat hierbei im Vergleich zu der entsprechend konjugierten Aufnahme am gegenüberliegenden Ende 217 ein leichtes Übermaß, so dass ein staubdichter Presssitz realisiert werden kann.

Wie FIG.2B am besten zeigt, sind auf Höhe der neutralen Faser der Leitungsführungseinrichtung 200 am Übergang zwischen Innenseite 211 und Außenseite 212 flanschartige Längsverstrebungen 222 vorgesehen. Die Längsverstrebungen 222 sind einstückig mit dem Material verbunden, welches zwei benachbarte Wellenberge 214 an der Außenseite 212 der Umhüllung 210 bildet. So wird, zusammen mit den als Anschläge wirkenden Flanken 215 der Wellenberge 214, eine stabile Struktur ermöglicht, welche auch große freitragende Längen bei vollständiger Befüllung der Leitungsführungseinrichtung 200 ohne störende Durchbiegung gestattet. Um diesen Effekt zu verstärken, können die einstückig hergestellten Teilstücke, wie etwa FIG.2A zeigt, in belastungsfreier Lage bereits konkav vorgekrümmt sein, d.h. mit einer inhärenten Vorspannung in Bezug auf die Strecklage gefertigt werden. Die Längsverstrebungen 222 erhöhen zudem die Schub- und Druckfestigkeit d.h. die mechanische Belastbarkeit der Umhüllung 210, so dass eine Leitungsführungseinrichtung 200 mit großer Gesamtlänge realisiert werden kann.

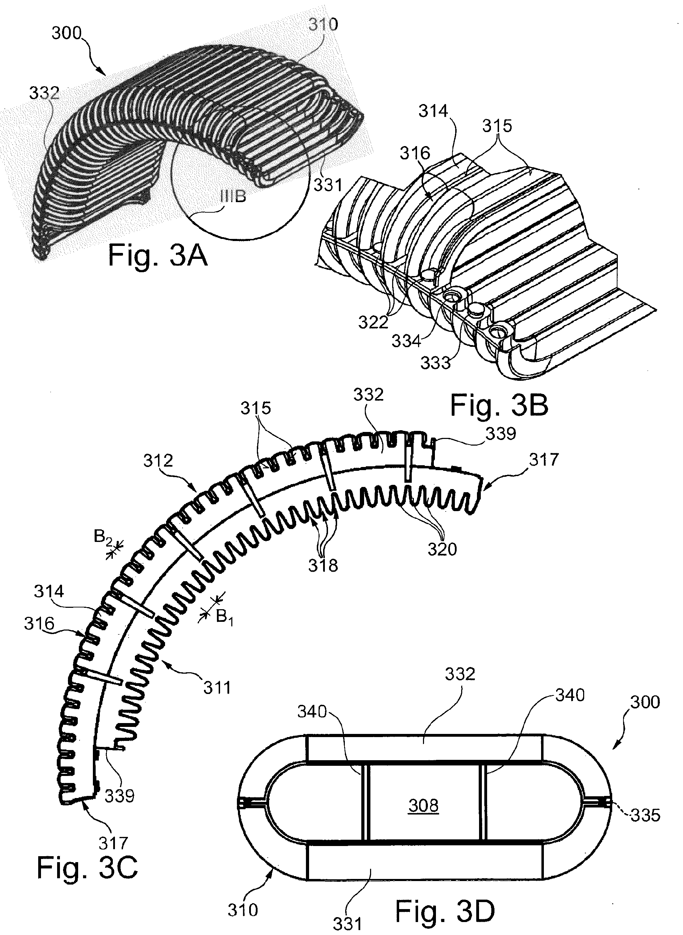

FIG.3A-3C zeigen ein zweites Ausführungsbeispiel einer Leitungsführungseinrichtung 300, welche ebenfalls eine Umhüllung 310 mit asymmetrischen Biegeverhalten in Bezug auf die Krümmung konkav und konvex um die Umlenkachse A hat. Hierzu ist analog zu FIG.2A-2C an der Außenseite 312 ein anderes Profil vorgesehen, als an der Innenseite 311. Entsprechende oder identische Merkmale im Vergleich zu FIG.2A-2C sind demnach mit entsprechend erhöhten Bezugszeichen versehen und werden nicht wiederholt beschrieben.

Ein wesentlicher Unterschied des zweiten Ausführungsbeispiels nach FIG.3A-3D liegt darin, dass die Teilstücke zum abschnittsweisen Zusammensetzen der Umhüllung 310, anders als in FIG.2A-2C, jeweils aus zwei separat hergestellten Schalenteilen 331, 332 zusammengesetzt sind, wobei ein Schalenteil 331 mit einem Profil die Innenseite 311 der Umhüllung 310 und das andere Schaltenteil 332 mit einem verschiedenartigen Profil die Außenseite 312 bildet.

Wie die Vergrößerung FIG.3B zeigt, liegt die Schnittstelle 335 zur Verbindung der Schalenteile 331, 332 miteinander auf Höhe der neutralen Faser der Leitungsführungseinrichtung 300. Die Verbindung kann, wie FIG.3B beispielhaft veranschaulicht, mittels beliebiger form- und/oder kraftschlüssiger Verbindung realisiert werden. Beim Beispiel nach FIG.3A-3D weisen beide Schalenteile 331, 332 an der Schnittstelle 335 jeweils in den Wellentälern 316 bzw. 318 alternierend angeordnete Druckknöpfe 333 und entsprechend konjugiert geformte Aufnahmen 334 auf. Auch andere für eine staubdichte Verbindung der Schalenteile 331, 332 geeignete Befestigungsmittel liegen im Rahmen der Erfindung. Sofern keine stoffschlüssige Verbindung verwendet wird, erleichtert das zweite Ausführungsbeispiel nach FIG.3A-3D gegenüber dem ersten Beispiel in FIG.2A-2C die Wartung, da einzelne Längsabschnitte der Leitungsführungseinrichtung 300 leichter zugänglich sind.

Wie FIG.3A-3C zeigen, werden die Schalenteile 331, 332 bevorzugt unter einem gewissen Längsversatz relativ zueinander aneinander befestigt, ähnlich einem Mauerwerksverband (Engl. brickwork course). So können die zur Verbindung von zwei gegenüberliegenden Schalenteilen 331, 332 miteinander vorgesehenen Befestigungsmittel, beispielsweise Druckknöpfe 333 und entsprechende Ausnehmungen 334, zugleich zur Verstärkung der Längsverbindung der Teilabschnitte der Umhüllung 310 in Längsrichtung genutzt werden. Demnach wird an der Schnittstelle 335 eine in Zugrichtung scherfeste Verbindung der Schalenteile 331, 332 bevorzugt. Zur Abdichtung gegen ein Austreten von abriebbedingtem Feinstaub weist jedes Schalenteil 331, 332 vorzugsweise an einem Ende eine Art Dichtlippe 339 auf, welche in den endseitigen Wellenberg 314 am jeweils gegenüberliegenden Ende 317 dichtend eingreift.

FIG.3D zeigt einen weiteren Unterschied des zweiten Ausführungsbeispiels im Vergleich zu FIG.2A-2C. Durch die zweiteilige Herstellung der Längsstücke der Umhüllung 310 können an einem der beiden Schalenteile 331, 332, beispielsweise am die Außenseite 312 bildenden Schalenteil 332, in der Bewegungsebene verlaufende Trennstege angeordnet werden zur Aufteilung des Innenraums 308. Durch die Trennstege 340 können die verschiedenen Leitungen voneinander getrennt geführt werden, wodurch Abrieb zwischen diesen Leitungen weitestgehend vermieden wird.

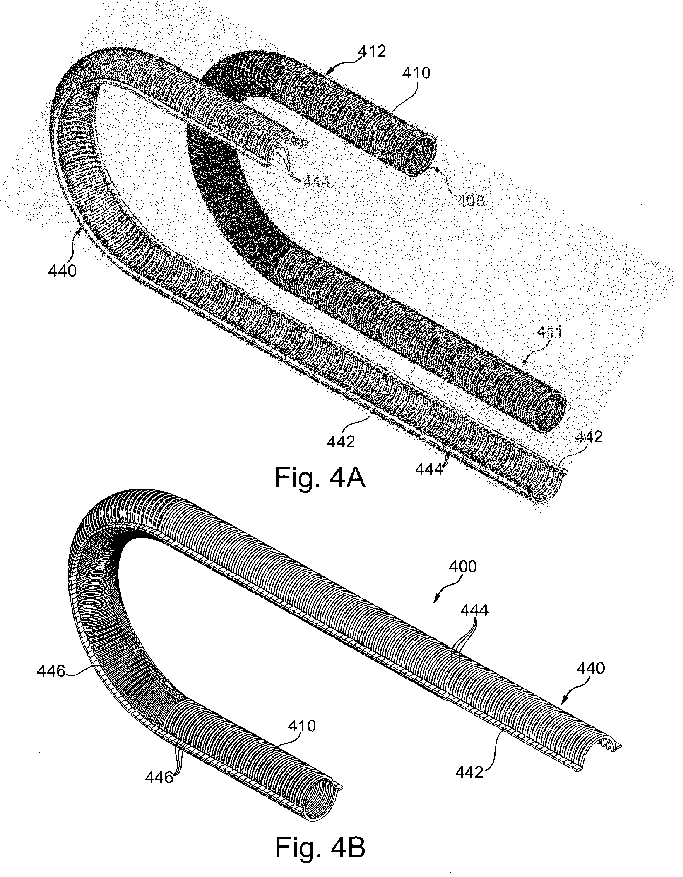

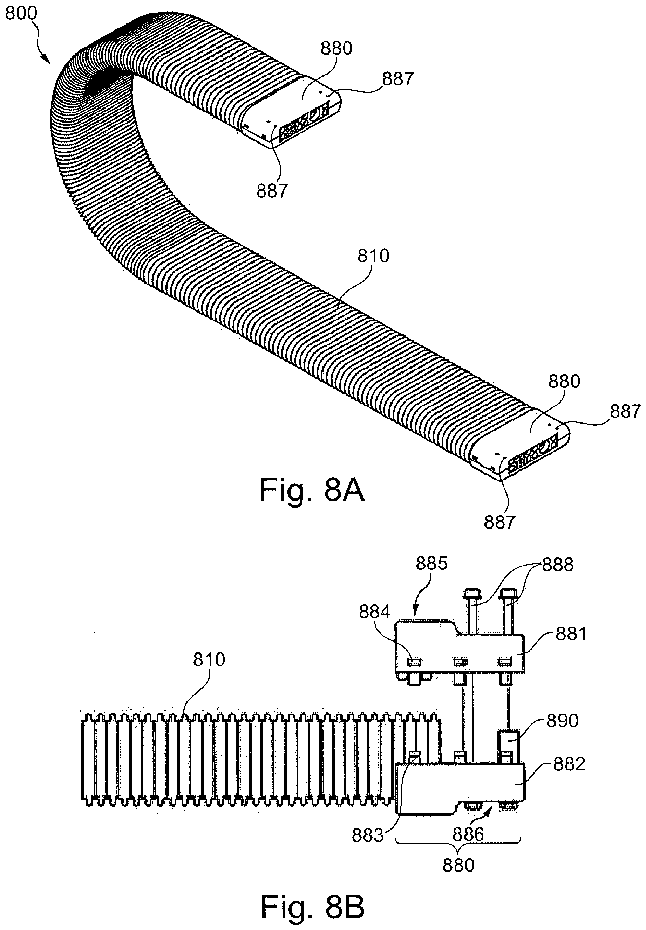

FIG.4A-4C zeigen eine alternative, dritte Ausführungsform einer Leitungsführungseinrichtung 400. Diese besteht, abgesehen von Anschlussflanschen zum staubdichten Befestigen der Enden (wie in FIG.8A-8B beispielhaft gezeigt), aus lediglich zwei wesentlichen Bestandteilen, nämlich einer Umhüllung 410 und einem speziell gefertigten Stützgerippe 440. Die in FIG.4A einzeln gezeigte Umhüllung 410 kann als herkömmlicher Wellschlauch ausgeführt sein. Demnach kann der Wellschlauch 410 für sich genommen ein symmetrisches Biegeverhalten in jede Richtung haben, d.h. auch in Bezug auf konkave oder konvexe Krümmung um die Umlenkachse des Umlenkbogens 104 (FIG.1). Zur Gewährleistung eines asymmetrischen Biegeverhaltens mit einer erheblich reduziert konvexen Biegsamkeit im Vergleich zur konkaven Krümmung um die Umlenkachse A, wird im Ausführungsbeispiel gemäß FIG.4A-4C das separat hergestellte Stützgerippe 440 von außen, in Bezug auf den Umlenkbogen 104 an der Außenseite 412 des Wellschlauchs 410, angebracht.

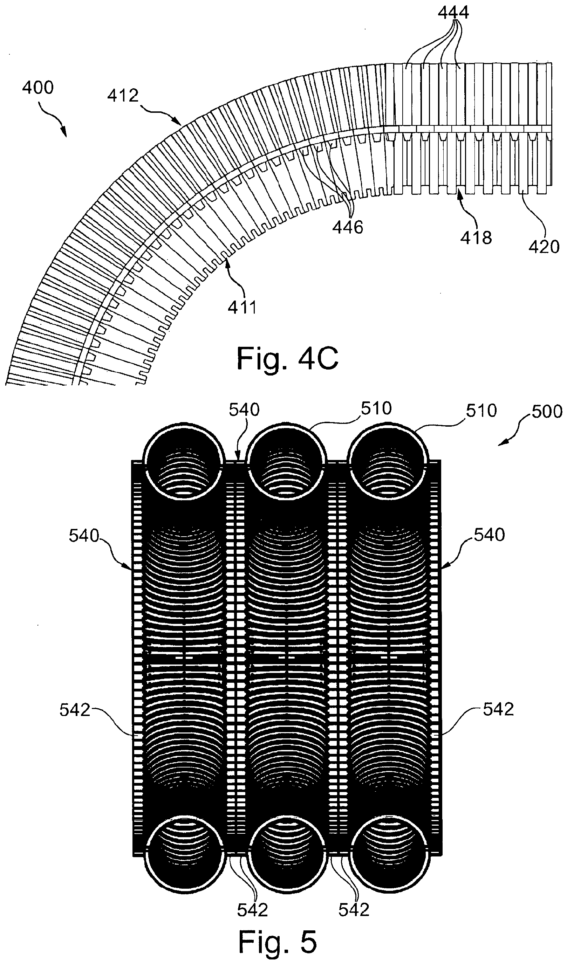

Das Stützgerippe 440 ist im Biegeverhalten asymmetrisch. Es lässt sich leicht konkav um die Umlenkachse A biegen, jedoch nur begrenzt konvex in die entgegengesetzte Richtung. Wie am besten aus FIG.4C ersichtlich, weist das Stützgerippe 440 zwei gegenüberliegende, in Längsrichtung verlaufende Träger 442 auf, an welchen im Wesentlichen senkrecht, in Umfangsrichtung verlaufende Querrippen 444 vorgesehen sind. Die Träger 442 und Querrippen 444 können einstückig aus Kunststoff beispielsweise im Spritzgussverfahren hergestellt werden.

Formgebung und Verlauf der Querrippen sind der Außenkontur des Querschnitts der Umhüllung 410 angepasst. Bei einem Wellschlauch 410 mit etwa kreisrundem Querschnitt sind die Querrippen 444 wie in FIG.4A-4B etwa kreisbogenförmig und haben ein Bogenmaß von etwa 180° (vgl. auch FIG.5). Die in Umfangsrichtung verlaufenden Querrippen 444 des Stützgerippes 440 sind parallel zueinander jeweils in regelmäßigem, vorgegebenem Abstand an den Trägern 442 befestigt. Wie FIG.4C am besten zeigt, dienen die Querrippen 444 hauptsächlich dazu, die ansonsten freien Wellentäler 420 an der Außenseite 412 des Wellschlauchs 410 weitestgehend zu füllen bzw. zu schließen. Auf diese Weise wird an der Außenseite 412 durch die Wellentäler 420 die Flexibilität bzw. Biegsamkeit in Richtung entgegen der konkaven Krümmung um die Umlenkachse A erheblich reduziert oder, je nach Wellprofil des Wellschlauchs 410, vollständig unterbunden. Das Stützgerippe 440 ist damit vorzugsweise so ausgeführt, dass der regelmäßige Abstand zwischen den Querrippen 444 der Wellenlänge, d.h. dem periodischen Abstand zwischen zwei aufeinander folgenden Wellentälern 420 des Wellschlauchs 410, entspricht. So wird erreicht, dass in jede Welle des Wellprofils genau eine Querrippe 444 eingreift.

Zusätzlich zur Funktion als Verstärkung des Wellschlauchs 410 hat das Stützgerippe 440 auch die Wirkung, die neutrale Faser auf Höhe der gegenüberliegenden Träger 442 zu definieren und zugleich auch die Bewegungsebene des Umlenkbogens 104 (FIG.1) festzulegen. Nicht näher gezeigt sind Anschlussmittel an den Enden des Stützgerippes 440, um die Träger 442 jeweils fest mit den Anschlussstellen zu verbinden (vgl. FIG.8). Durch die Träger 442 kann das Stützgerippe 440 zusätzlich Zug- und Druckkräfte abfangen und die Lebensdauer und Belastbarkeit des Wellschlauchs 410 erhöhen. Das Stützgerippe 440 hat demnach vorzugsweise eine Längserstreckung, welche der Gesamtlänge der Leitungsführungseinrichtung 400 von der einen Anschlussstelle zur anderen Anschlussstelle 105, 107 (FIG.1) entspricht.

Schließlich zeigt FIG.4C in tangentialer Verlängerung der Querrippen 444 beidseitig vorgesehene laschen- oder zungenartige Fortsätze 446. Die Fortsätze 446 sind in Seitenansicht etwa keil oder V-förmig. Die Fortsätze 446 und haben im Vergleich zum Umfang des Wellschlauchs 410 eine sehr kurze Erstreckung in Umfangsrichtung und bilden einen vorgegebenen Öffnungswinkel zwischen den in Längsrichtung gewandten stirnseitigen Schenkeln. Die Fortsätze 446 greifen, wie FIG.4B-4C zeigen, über ein geringes Umfangsmaß außenseitig in die Wellentäler 420 des Wellschlauchs 410 ein. Durch ein vorbestimmtes Winkelmaß des Öffnungswinkels zwischen den gegenüberliegenden Schenkeln der Fortsätze 446 wird der minimale Krümmungsradius des Umlenkbogens 104 der Leitungsführungseinrichtung 400 aus Wellschlauch 410 und Stützgerippe 440 vorgegeben.

FIG.5 zeigt eine Weiterbildung des Ausführungsbeispiels nach FIG.4A-4C. In diesem Ausführungsbeispiel besteht die Leitungsführungseinrichtung 500, abgesehen von den endseitigen Anschlussflanschen, im Wesentlichen aus drei seitlich nebeneinander und parallel angeordneten Wellschläuchen 510, welche durch Stützgerippe 540 parallel gehalten werden. Hierzu sind drei Stützgerippe 540, im Aufbau identisch zu FIG.4A-4C, jeweils seitlich mit ihren Trägern 542 aneinander befestigt. Die Stützgerippe 540 sind bevorzugt als separate Einzelteile hergestellt und weisen zur Verbindung mit dem benachbarten Stützgerippe 540 geeignete Verbindungsmittel an den Trägern 542 auf. Grundsätzlich können auch mehrere Stützgerippe 540 aus einem Stück zusammenhängend hergestellt sein.

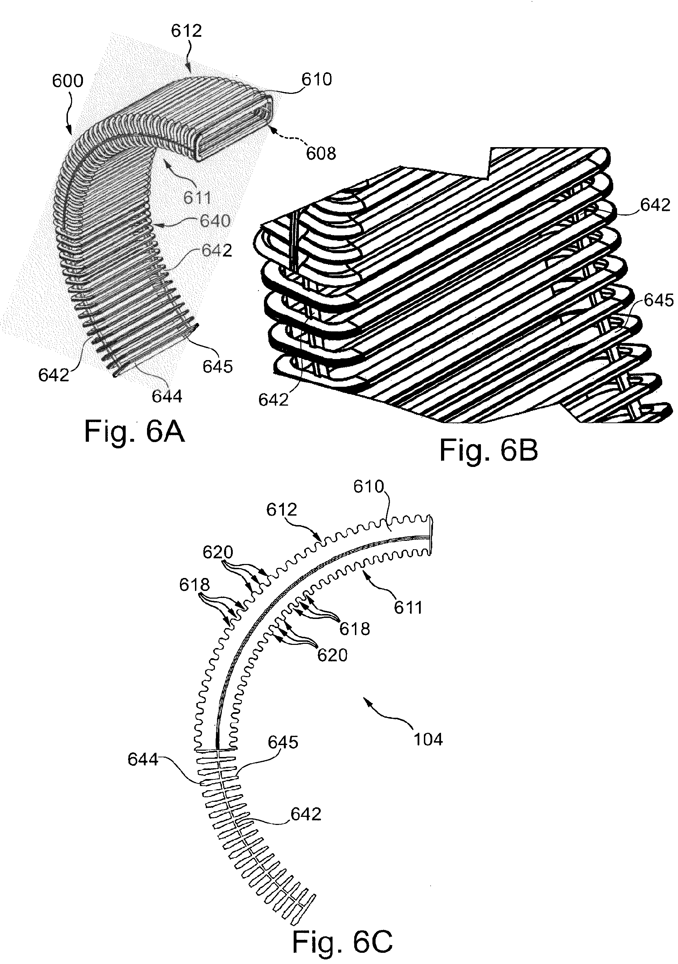

FIG.6A-6C zeigt als weiteres Ausführungsbeispiel einer Leitungsführungseinrichtung 600 eine Abwandlung des Beispiels nach FIG.4A-4C. Die Leitungsführungseinrichtung 600 kann ebenfalls im Wesentlichen aus einem herkömmlichen Wellschlauch als Umhüllung 610, hier mit etwa rechteckigem Querschnitt, und einem separaten Stützgerippe 640 zur Erzielung eines asymmetrischen Biegeverhaltens bestehen. Anders als im Beispiel nach FIG.4A-4C ist das Stützgerippe 640 der Leitungsführungseinrichtung 600 nicht von außen am Wellschlauch 610, sondern innen in der als Wellschlauch ausgeführten Umhüllung 610 angeordnet. Als weiteren wesentlichen Unterschied weist das Stützgerippe 640 sowohl zur Außenseite 612 zugewandte Querrippen 644 als auch zur Innenseite 611 zugewandte Querrippen 645 auf. Die äußeren Querrippen 644 greifen von innen in den Hohlraum der Wellenberge 620 an der Außenseite der Umhüllung 610. Die innenliegenden Querrippen 645 greifen von innen entsprechend in den Hohlraum der Wellenberge 620 an der Innenseite 611 der Umhüllung 610. Die wellschlauchartige Umhüllung 610 an sich kann an beiden Seiten ein identisches, herkömmliches Wellprofil mit beiderseits identisch geformten Wellentälern 618 und Wellenbergen 620 aufweisen. Die Umhüllung 610 kann, anders als in den Figuren gezeigt, zwischen beiden Enden durchgehend hergestellt sein. Das Stützgerippe 640 kann durchgehend einstückig hergestellt oder aus einzelnen Abschnitten zusammengesetzt werden, die nacheinander in die Umhüllung 610 eingeführt werden. Alternativ zu einem herkömmlichen Wellschlauch mit an sich symmetrischem Biegeverhalten ist es auch denkbar, analog zu FIG.2A-2C bzw. FIG.3A-3D, die Umhüllung 610 abschnittsweise aus ein- oder zweiteiligen Modulen zusammenzusetzen. Im letztgenannten Fall kann das Wellprofil an der Innenseite 611 anders als das Wellprofil an der Außenseite 612 ausgeführt sein.

Das asymmetrische Biegeverhalten wird mit dem Stützgerippe 640 maßgeblich dadurch erzielt, dass die Querrippen 644 an der Außenseite 612 eine größere axiale Breite aufweisen, als die Querrippen 645 an der Innenseite 611. Auf diese Weise wird, wie bereits bei den vorhergehenden Ausführungsbeispielen, sichergestellt, dass die Umhüllung 610 an ihrer Außenseite 612 axial bzw. in Längsrichtung eine geringere Stauchbarkeit aufweist, als an ihrer Innenseite 611. Das Stützgerippe 640 ermöglicht, aufgrund der unterschiedlich geformten Querrippen 644 bzw. 645 an Innen- und Außenseite 611 bzw. 612, einerseits die Verstärkung der Umhüllung 610 gegen Durchbiegen im freitragenden Ober- oder Untertrum 101 bzw.103 und andererseits zugleich die Begrenzung auf einen vorgegebenen Krümmungsradius im Umlenkbogen 104. Die innen liegenden Querrippen 644 haben hierzu eine geringere axiale Breite als die außen liegenden Querrippen 645.

Wie bereits beim Beispiel nach FIG.4A-4C wird zudem durch gegenüberliegende Träger 642, an welchen die umlaufenden Querrippen 644, 645 befestigt sind, eine definierte neutrale Faser für den Biegeverlauf der Umhüllung 610 vorgegeben. Die Träger 642 können auch zum Abfangen von Schub- und Zugkräften genutzt werden bei entsprechender Befestigung aneinander bzw. an den Anschlussstellen.

Bei allen vorhergehenden Ausführungsbeispielen werden die nicht näher gezeigten Leitungen unmittelbar im Innenraum 208; 308; 408... aufgenommen und von der Umhüllung geführt und getragen. Eine besondere, zusätzliche Leitungsführung ist hierzu in den Beispielen nach FIG.2-6 nicht erforderlich.

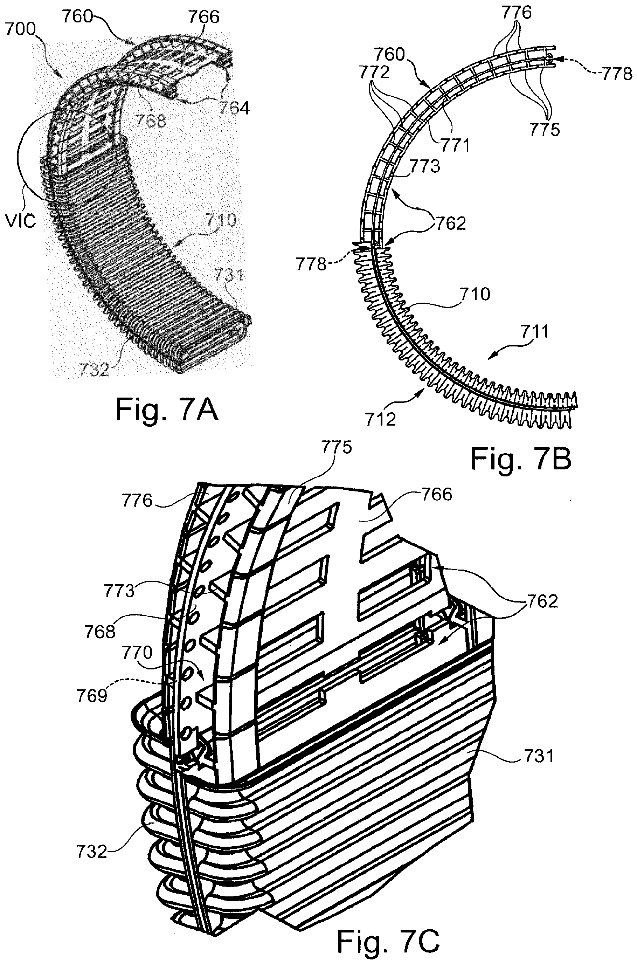

FIG.7A-7C zeigen eine Leitungsführungseinrichtung 700 nach einem von den vorhergehenden Ausführungsbeispielen verschiedenen und unabhängigen Prinzip.

Die Leitungsführungseinrichtung 700 gemäß FIG.7A-7C besteht im Wesentlichen aus einer bandartigen Leitungsführung 760, aus in Längsrichtung aneinander befestigten einzelnen Teilstücken 762, und einer staubdichten ein- oder mehrteiligen Umhüllung 710. Jedes Teilstück 762 als Glied der Leitungsführung 760 hat ein linkes und ein rechtes Seitenteil 764, welche über ein durchgehendes Trägerband 766 einstückig verbunden sind, oder alternativ als separate Teile seitlich daran befestigt werden. Das Trägerband 766 ist um die Umlenkachse biegsam und aus einem flexiblen zugfesten Kunststoff hergestellt. Zur Verbesserung der Biegsamkeit um die Umlenkachse ist das Trägerband 766 mit einem Lochmuster versehen, dessen längliche Löcher quer zur Längsrichtung verlaufen. Die staubdichte Umhüllung 710 ist aus Längsschnitten mit jeweils zwei Schalenteilen 731 bzw. 732 modular zusammengesetzt.

Wie am besten aus FIG.7C ersichtlich, weisen die Teilstücke 762 der Leitungsführung 760 jeweils seitlich von den Seitenteilen 764 nach außen vorstehende Befestigungsvorsprünge 768 auf. Die Befestigungsvorsprünge 768 haben in regelmäßigen Abständen aufeinander folgende Befestigungsmittel 769.

Die Befestigungsvorsprünge 768 dienen zur Befestigung eines inneren und äußeren Schalenteils 731 bzw. 732 einer Umhüllung 710. FIG.7B zeigt als Befestigungsmittel 769 bspw. Ösen zur Befestigung mittels Rastverbindung, wie mittels einer Druckknopfbefestigung oder dgl. Auch andere form- und/oder kraftschlüssige Befestigungsmittel 769 liegen im Rahmen der Erfindung, etwa eine Feder-/Nut-Verbindung oder sonstige geeignete Kunststoffverschlüsse z.B. wie im Patent US2613421A.

Die Befestigungsvorsprünge 768 bilden vorzugsweise einstückige, ebene Verlängerungen des Trägerbands 766. Die Befestigungsvorsprünge 768 und das Trägerband 766 sind auf Höhe der neutralen Faser der Leitungsführungseinrichtung 700 angeordnet bzw. geben diese vor. Zugleich wird so die Bewegungsebene des Umlenkbogens 104 (vgl. FIG.1) vorgegeben. So liegt auch die Schnittstelle zwischen den Schalenteilen 731 bzw. 732 auf Höhe der neutralen Faser.

Jedes Seitenteil 764 hat einen in Längsrichtung verlaufenden, um die Umlenkachse biegsamen Verbindungssteg 770, welcher gegebenenfalls einstückig mit dem Trägerband 766 hergestellt ist, und der Übertragung von Druck- und Zugkräften dient. Ein weiterer Verbindungsteg kann zur Querstabilisierung, wie FIG.7C am besten zeigt, mittig im Trägerband 766 vorgesehen werden.

Senkrecht zum Trägerband 766 bzw. Verbindungssteg 770 sind an jedem Seitenteil 764 im Wesentlichen T-förmige Stege 771 bzw. 772 zur Innenseite 711 bzw. zur Außenseite 712 angeformt. Die T-förmigen Stege 771, 772 haben jeweils einen Fußsteg 773 und einen in Längsrichtung verlaufenden Längssteg 775 bzw. 776. Die innenliegenden T-förmigen Stege 771 bilden an den in Längsrichtung weisenden Stirnseiten ihrer Längsstege 775 erste Anschläge zur Begrenzung des Krümmungsradius im Umlenkbogen 104. Die gegenüberliegenden zweiten T-förmigen Stege 772 andererseits bilden an den in Längsrichtung weisenden Stirnseiten ihrer Längsstege 776 zweite Anschläge zur Begrenzung der konvexen Durchbiegung in die entgegengesetzte Richtung. Aufbau, Anordnung und Wirkweise der T-förmigen Stege 773, 776 entsprechen dem bevorzugten Ausführungsbeispiel der T-förmigen Stege im Patent EP 2 142 823 B1, auf dessen Inhalt zur Vermeidung unnötiger Wiederholung insoweit vollumfänglich Bezug genommen wird.

Die Leitungsführung 760 unterscheidet sich von der bandkettenartigen Leitungsführungseinrichtung gemäß EP2142823B1 insbesondere durch die Befestigungsvorsprünge 768 zur Befestigung der Umhüllung 710. Ein weiter Unterschied liegt in der einstückigen Herstellung der Teilstücke 762, d.h. Seitenteile 764 und Trägerband 766 sind aus einem Stück hergestellt. Ansonsten können Aufbau und Wirkweise dem bevorzugten Ausführungsbeispiel aus EP2142823B1 entsprechen, insbesondere hinsichtlich der formschlüssigen Verbinder 778 endseitig an den Seitenteilen zur Verkettung der Teilstücke 762 in Längsrichtung.

Die Umhüllung 710 im Ausführungsbeispiel nach FIG.7A-7C kann grundsätzlich beliebig ausgeführt sein, sofern Sie staubdicht geschlossen ist. Die Umhüllung 710 kann für sich genommen ein asymmetrisches Biegeverhalten hinsichtlich konkaver und konvexer Krümmung um die Umlenkachse A (vgl. FIG.1) aufweisen, oder aber diesbezüglich ein symmetrisches Biegeverhalten. Die Begrenzung des Krümmungsradius im Umlenkbogen 104 wird bei der Leitungsführungseinrichtung 700 durch die innenliegenden T-förmigen Stege 771 der Leitungsführung 760 gewährleistet. Große freitragende Längen andererseits werden durch die außenliegenden T-förmigen Stege 772 sichergestellt. Die Befestigung der Schalenteile 731, 732 der Umhüllung 710 an der Leitungsführung 760 kann auf eine beliebige, zur staubdichten Verbindung geeignete an sich bekannte Art erfolgen, wobei lösbare Verbindungen bevorzugt sind.

FIG.7A-7C zeigen eine Umhüllung 710, welche abschnittsweise aus zwei Schalenteilen 731, 732 zusammengesetzt ist und an beidseitigen Befestigungsvorsprüngen 768 gesichert sind. In einer hier nicht gezeigten Alternativausführung kann auch eine einteilige, im Umfang aufklapp- bzw. aufzubiegende Umhüllung lediglich einseitig an einem der Seitenteile 764 befestigt werden. Hierzu ist es somit ausreichend, wenn Befestigungsvorsprünge 768 lediglich an einer Seite vorgesehen sind.

FIG.8A-8B zeigen eine bevorzugte Ausführung geeigneter Anschlussflansche 880 zur endseitigen Befestigung einer der vorstehend beschriebenen Leitungsführungseinrichtungen an den Anschlussstellen 105, 107 (vgl. FIG.1). Im Beispiel nach FIG.8A-8B ist die Umhüllung 810 als Wellrohr bzw. Wellschlauch mit paralleler Wellung und langlochförmigem bzw. länglichem Querschnitt gezeigt, wie z.B. in FIG.2A-2C, FIG.3A-3D oder FIG.7A-7C.

FIG.8B zeigt in Explosionsansicht lediglich einen Teil der Umhüllung 810 bzw. der Leitungsführungseinrichtung 800, nämlich einen der beiden analog ausgeführten Endbereiche, welche jeweils mit einem identisch ausgeführten Anschlussflansch 880 befestigt werden. Die Anschlussflansche 880 dienen zugleich dem staubdichten Abschluss der offenen Enden der Umhüllung 810 und deren Befestigung an den Anschlussstellen 105, 107.

Zum Abdichten und Befestigen ist jeder Anschlussflansch 880 aus zwei zusammenwirkenden Klemmschalen 881, 882 zusammengesetzt, welche als staubdicht verbindbare, deckelartige Spritzguss-Formteile gestaltet sind. Die Klemmschalen 881, 882 sind durch Schnapphaken 883 und Aussparungen 884 miteinander verrastbar, wobei auch andere form- und/oder kraftschlüssige Verbindungen, insbesondere lösbare Rastverbindungen möglich sind. Die geschlossenen Klemmschalen 881, 882 halten an einem vorderen Endbereich 885 kraft- und/oder formschlüssig, insbesondere formschlüssig durch Eingriff in ein oder mehrere Wellentäler, die Umhüllung 810 in Längsrichtung fest und dichten die Umhüllung 810 umfänglich staubdicht ab, ggf. mittels einer nicht gezeigten zusätzlichen Dichtung.

Wie FIG.8A-8B zeigen sind an beiden Klemmschalen 881, 882 zur Befestigung zwei Paar Durchgangsöffnungen 887 für Verbindungsschrauben 888 vorgesehen. Die Durchgangsöffnungen 887 für Verbindungsschrauben 888 im hinteren Endbereich 886 erlauben zugleich die Befestigung einer Durchführdichtung 890 zur staubdichten Durchführung der Kabel, Schläuche. Die Durchführdichtung 890 kann z.B. durch die Verbindungsschrauben 888 auf die Leitungen geklemmt werden. Durch diese Gestaltung der Klemmschalen 881, 882 kann in einem Arbeitsschritt die Abdichtung der Umhüllung 810 und das Befestigen der Enden der Leitungsführung 800 an den Anschlüssen 105, 107 (cf. FIG.1) erfolgen.

Die separate Durchführdichtung 890 in jedem Anschlussflansch 880 ist bevorzugt kompressibel und/oder mit Aussparungen für die Leitungen versehen. Die Durchführdichtung 890 kann z.B. als einstückiger Polyurethan-Block oder als mehrlagiger Neoprenstapel ausgeführt sein. Im hinteren Endbereich der Klemmschalen 881, 882 ist jeweils eine innenliegende Halterung für die Durchführdichtung 890 vorgesehen.

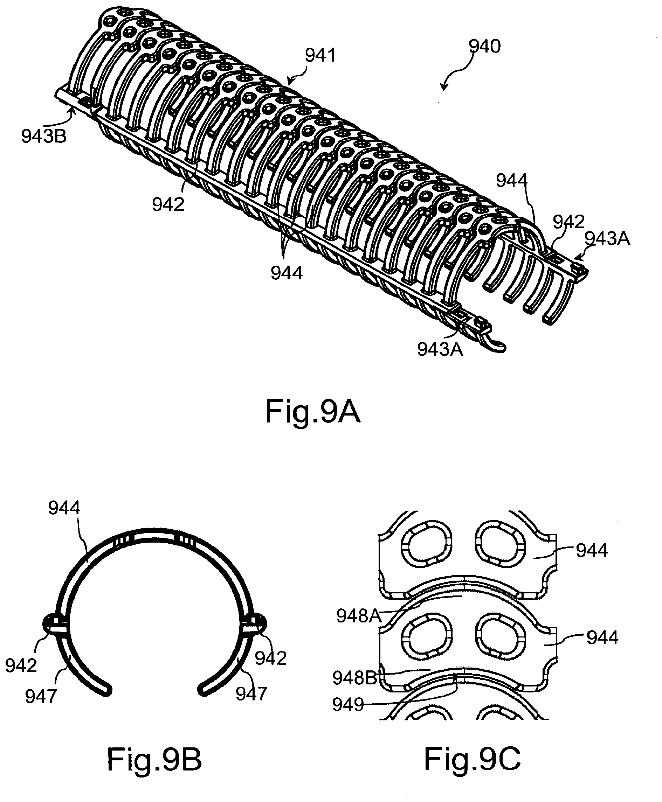

FIG.9A-9C zeigen einen Längsabschnitt einer weiteren Ausführungsform eines Stützgerippes 940, nämlich ein langgestrecktes Modul 941 zum abschnittsweisen Zusammenfügen mit weiteren identischen Modulen 941. Hierzu sind endseitig an Trägersträngen 942 konjugierte Clipverbinder 943A, 943B mit Rastclips und -aufnahmen vorgesehen, um die Module 941 bzw. Trägerstränge 942 längs miteinander zu verketten. Das Stützgerippe 940 bzw. Modul 941 ist einstückig bzw. integral aus dauerbiegefestem Kunststoff hergestellt und hat u.a. eine Vielzahl von Querrippen 944. Die Querrippen 944 verlaufen im Querschnitt kreisbogenförmig über ca. den halben Umfang zwischen den beiden in Längsrichtung parallelen Trägersträngen 942 und sind dabei in regelmäßigem Längsabstand zueinander parallel angeordnet. Ebenfalls regelmäßig parallel erstrecken sich jeweils gegenüberliegend im Querschnitt (FIG.9B) eine Vielzahl paarweise spiegelsymmetrisch angeordneter Haltearme 947. Die Haltearme 947 verlaufen ebenfalls im Wesentlichen kreisbogenförmig im Querschnitt, jeweils nur über einen Anteil des Umfangs, z.B. über ca. ein Achtel des Umfangs. Die Haltearme 947 können aufspreizen, um das Stützgerippe 940 radial auf einem Wellschlauch (hier nicht gezeigt, vgl. 410 in FIG.4A) anzubringen. Die Haltearme 947 können in Längsrichtung mittig zwischen den Querrippen 944 in die Trägerstränge 942 übergehen.

Durch geeignete Flexibilität um die Längsachse und aufgrund der Haltearme 947 kann ein Stützgerippe 940 aus Modulen 941, besser als das Stützgerippe in FIG.4A-4C, zusammen mit Wellschlauch mit beliebigem Wellprofil, einschließlich wendel- oder schraubenförmigem Profil, und innerhalb Toleranzgrenzen auch mit unterschiedlichen Durchmessern verwendet werden. Die Haltearme 947 klammern an der äußeren Oberfläche des Wellschlauchs und müssen nicht in Wellentäler eingreifen. Zudem wird so die Montage am Wellschlauch spürbar erleichtert.

Zur Begrenzung des minimalen Krümmungsradius im Umlenkbogen bzw. Umlenkbereich (FIG.1) können Zwischenabstand und Breite der Haltearme 947 in Längsrichtung anwendungsgemäß eingestellt werden. So können insbesondere sehr kleine Radien mit besonders flexiblem Wellschlauch realisiert werden.

Zur Versteifung gegen Durchbiegen entgegen der gewünschten Krümmung, insbesondere von sehr flexiblem Wellschlauch , weisen die Querrippen 944 gegenüberliegend zur Öffnung zwischen den Haltearmen 947 in Längsrichtung vorstehende bzw. axial ausbuchtende Vorsprünge 948A, 948B auf, die integral mit den Querrippen 944 geformt sind. Die gegenüberliegenden Vorsprünge 948A, 948B sind in Draufsicht konjugiert geformt, z.B. mit einer Halbmond- bzw. Sichelform des einen Vorsprungs 948A und einer dazu im Radius passenden Aussparung 949 am anderen Vorsprung 948B. Die Vorsprünge 948A, 948B wirken als Anschläge, mit denen die Querrippen 944 in Strecklage nach FIG.9A aneinander anliegen. Durch konjugierte Formgebung der Vorsprünge 948A, 948B kann im Anschlag eine zentrierende bzw. richtungsgebende Wirkung und auch eine seitlich, d.h. gegen Ausbrechen quer zu gewünschten Krümmungsrichtung, stabilisierende Wirkung erreicht werden, wie am besten aus FIG.9C ersichtlich. Durch die Kreisbogenform wird die wirksame Anschlagfläche vergrößert. Zudem kann ein Eingriff zwischen den axialen Vorsprüngen 948A, 948B auch zu einem gewissen Grad gegen Torsion versteifen.

In Verbindung mit einem Stützgerippe 940 aus Modulen 941 kann, wie bereits bei FIG.4-5, herkömmlicher Wellschlauch als Umhüllung mit vordefiniertem Krümmungsverhalten, d.h. als Leitungsführung zwischen zwei relativbeweglichen Anschlussstellen (cf. FIG.1) genutzt werden.

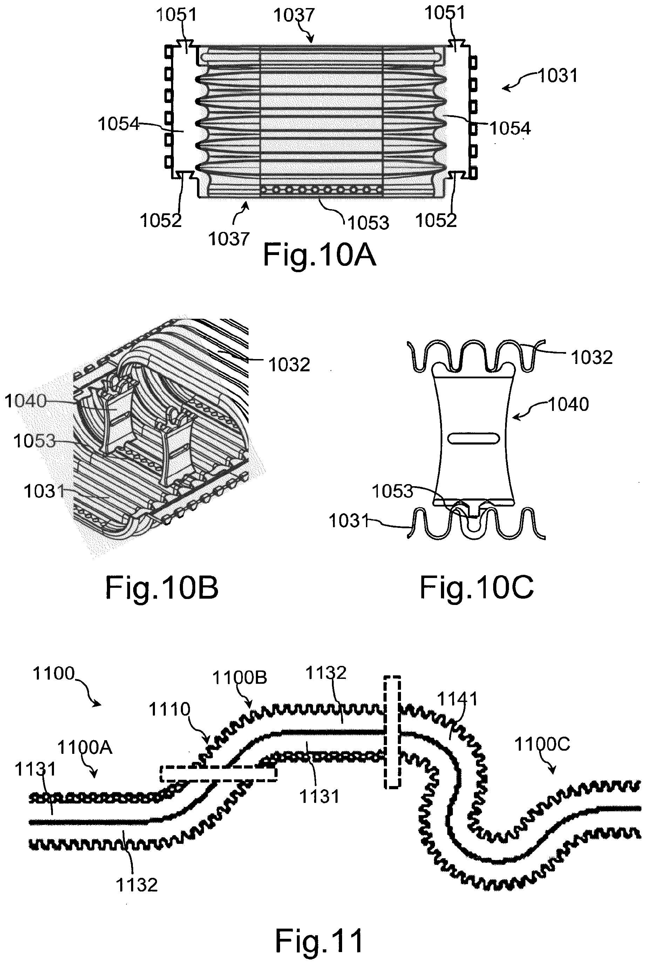

FIG.10A-10C zeigen eine zu FIG.3A-3D alternative Ausführungsform von Schalenteilen 1031, 1032, wobei nur die wesentlichen Unterschiede im Aufbau erläutert werden. Das Schalenteil 1031 nach FIG.10A-10C hat an einem Stirnende 1037, welches die Dichtlippe zum Eingriff in das gegenüberliegende Stirnende (nicht gezeigt) aufweist, eine innere Lochleiste 1053 mit senkrecht zur Längsrichtung regelmäßig angeordneten Blindlöchern. In die Blindlöcher der Lochleiste 1053 kann wahlweise ein getrennter Trennsteg 1040 mit entsprechendem Zapfen eingesetzt werden. Die Trennstege 1040 sind so positionierbar, um den Innenraum nach Wunsch aufzuteilen und die Leitungen voneinander getrennt zu führen, wie beispielhaft aus FIG.10B-10C ersichtlich. Der Fuß des Trennstegs 1040 mit dem Zapfen kann zudem die beiden Stirnenden 1037 angrenzender Schalenteile 1031 übergreifen (hier nicht gezeigt) zur axialen Sicherung. Am anderen Ende können die Trennstege 1040 einen Fortsatz aufweisen, der passend und verliersicher in ein Wellental des Wellprofils eingreift, wie FIG.10C zeigt.

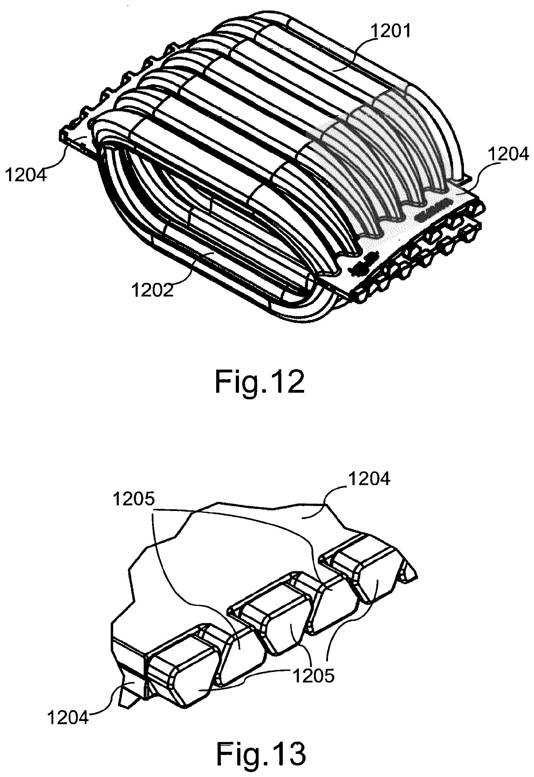

Die Schalenteile 1031, 1032 haben ferner an jedem der parallelen Befestigungsbänder 1054 zur Längsverstrebung bzw. Längsverstärkung, zwecks Sicherung am benachbarten Schalenteil (FIG.10B) jeweils endseitig an beiden Stirnenden 1037 jeweils zusammenwirkende Verbinder 1051, 1052 zur besseren Kraftübertragung. Die Verbinder 1051, 1052 können z.B. wie eine Schwalbenschwanz-Verbindung ausgeführt sein. Der Befestigungsmechanismus des Befestigungsbands 1054 für das gegenüberliegende Schalenteil 1031 bzw. 1032 weist in FIG.10A-10C Krampen für eine Verbindung ähnlich einem Reiß- bzw. Zippverschluss auf, die weiter unten zu FIG.12-16 näher erläutert sind. Ferner ist die axiale Gesamtlänge eines Schalenteils 1031, 1032 nach FIG.10A-10C insgesamt kürzer als in FIG.3A-3D, z.B. mit einer Erstreckung über weniger als zehn Wellenperioden des Wellprofils. Das Wellprofil beider Schalenteile 1031 bzw. 1032 kann jedoch wie in FIG.3A-3D ausgeführt sein.

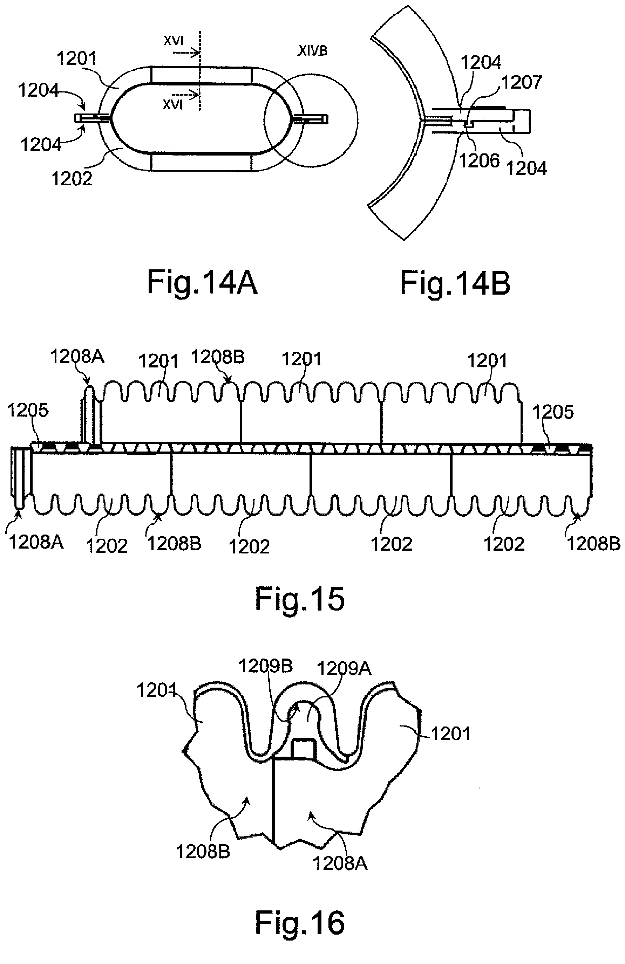

FIG.11 zeigt rein beispielhaft eine von vielen möglichen Gestaltungen einer Leitungsführungseinrichtung 1100 mit einer aus mehreren Längsabschnitten 1100A, 1100B, 1100C in Längsrichtung zusammengesetzten Umhüllung. Die Fügestellen der Längsabschnitte 1100A, 1100B, 1100C sind in FIG.11 nur schematisch gezeigt (gestrichelte Kästen). Im ersten Längsabschnitt 1100A sind die Schalenteile 1131, 1132, z.B. in der Ausführungsform nach FIG.3A-3D oder FIG.12-16, so angeordnet, dass eine gewünschte Krümmung gemäß einem ersten Drehsinn um eine Umlenkachse (nicht gezeigt) ermöglicht wird und die entgegengesetzte Durchbiegung in diesem Abschnitt 1100A weitgehend unterdrückt ist. Im zweiten Längsabschnitt 1100B sind die Schalenteile 1131, 1132 umgekehrt bzw. zur neutralen Faser gespiegelt angeordnet, d.h. dass das asymmetrische Biegeverhalten umgekehrt zum Längsabschnitt 1100A realisiert ist. Im dritten Längsabschnitt 1100C ist ein Wellschlauch 1141 mit symmetrischem Biegeverhalten, d.h. mit an den Breitseiten identischem Wellenprofil, vorgesehen. Im Beispiel nach FIG.11 ist die Leitungsführungseinrichtung 1100 im Wesentlichen in der Ebene der Figur biegsam und senkrecht dazu, d.h. seitlich stabil, da die Umhüllung einen länglichrunden Querschnitt aufweist (vgl. FIG.3D oder FIG.14B). Es ist jedoch möglich, z.B. anhand geeigneter Übergangsmuffen zwischen um 90° gedrehten Schalenteilen 1131, 1132, oder durch eine winkelverdrehte Anordnung von Stützgerippen, z.B. nach FIG.4A-4C oder FIG.9A-9C, an Wellschlauch mit kreisrundem Querschnitt, einen gewünschten dreidimensionalen Verlauf zu erzielen. So kann auch ein Verlauf mit winkelversetzten Krümmungsachsen zwischen einzelnen Längsabschnitten vordefiniert werden.

Nachfolgend werden weitere, unabhängige Aspekte der Erfindung anhand der FIG.12-16, mit Bezugnahme auf FIG.1, erläutert:

In FIG.1 ist eine schematisch gezeigte Leitungsführungseinrichtung allgemein mit 100 bezeichnet. Eine solche Leitungsführungseinrichtung 100 dient zur geschützten Führung von Kabeln, Schläuchen oder ähnlichen Leitungen, welche in den Abbildungen nicht näher gezeigt sind. Zwischen einem Obertrum und einem Untertrum bildet die Leitungsführungseinrichtung 100 in bekannter Weise einen etwa U-förmigen Umlenkbogen mit vorgegebener Krümmung. Der Umlenkbogen hat zur Vermeidung von Leitungsbrüchen insbesondere einen vorgegebenen, minimalen Krümmungsradius und gewährleistet damit, dass die zulässigen Krümmungsradien der geführten Leitungen nicht unterschritten werden.

Zum Aufbau der Leitungsführungseinrichtung 100 generell bzw. der für den Krümmungsradius besonderen Profilierung der Wellenberge und -iäler im Hauptteil der wellschlauchartigen Schalenteile 1201, 1202 verweisen wir auf die hier ausdrücklich einbezogene Lehre zu FIG.1 bzw. FIG.2-3 oben, insbesondere die obige Lehre zum Wellprofil gemäß FIG.2C.

Die Leitungsführungseinrichtung 100 bildet eine staubdichte wellschlauchartige Umhüllung und ist abschnittsweise aus jeweils zwei gegenüberliegenden, wellschlauchartigen Schalenteilen 1201; 1202, mit unterschiedlichen Profilen, siehe FIG.2C, zusammengesetzt. Das Schalenteil 1201 außen kann eine konkave Vorspannung aufweisen.

Jedes Schalenteil 1201; 1202 hat an den beiden Längsseiten ein in Längsrichtung durchgehendes Befestigungsband 1204. Das Befestigungsband 1204 hat jeweils eine Verzahnung mit regelmäßig angeordneten Krampen 1205 bzw. Zähnen, die mit einer entsprechenden Verzahnung mit Krampen 1205 bzw. Zähnen am Befestigungsband 1204 des gegenüberliegenden Schalenteils 1201; 1202 in der Art eines Reißverschlusses zusammenwirken.

Die Krampen 1205 sind an beiden Befestigungsbändern 1204 eines Schalenteils 1201, 1202 identisch geformt und angeordnet. Sie sind mit regelmäßigen Abständen bzw. Freiräumen angeordnet, sodass sie ineinandergreifen bzw. verschränken können wie bei einem Reißverschluss. Die Krampen 1205 haben einen in FIG.13 näher ersichtlichen Wirkungsquerschnitt der zumindest annähernd der Form eines gleichschenkligen Trapezes entspricht, wobei die schmale Seite jeweils von dem zu verbindenden Schalenteil 1201, 1202 abgewandt ist, d.h. dass die zulaufenden Schenkel bei verbundenen Schalenteilen 1201, 1202 miteinander verkeilen, wie FIG.13 zeigt.

Ein Lösen durch Querkräfte und Torsion in Bezug auf die Längsrichtung der Leitungsführungseinrichtung 100 wird so effektiv verhindert. Zudem können die Befestigungsbänder 1204 durch Translation bzw. Kraft in etwa senkrecht zur Längsrichtung der Schalenteile 1201, 1202 aneinander befestigt werden, d.h. ohne erhebliche Krümmung der Teile.

Die Krampen 15 sind integral mit den Befestigungsbändern 1204 bzw. dem Kunststoff der Schalenteile 1201, 1202 hergestellt. Sie stehen quer oder genau senkrecht zur Längsrichtung der Leitungsführungseinrichtung 100 seitlich nach außen vor, quasi in Verlängerungen der Befestigungsbänder 1204.

FIG.14A-14b zeigen im Bereich, zwischen der Verzahnung mit den Krampen 1205 und dem Übergang zur wellschlauchartigen Hülle der Schalenteile 1201, 1202, eine Längsnut 1206 im Befestigungsband 1204 an einer Seite. Die Längsnut 1206 wirkt mit einer entsprechenden Feder 1207 am zu verbindenden Schalenteil formschlüssig zusammen. Jedes Schalenteil 1201, 1202 kann an einer Seite im Befestigungsband 1204 eine Längsnut 1206 und an der anderen Längsseite im Befestigungsband 1204 eine Feder 1207 aufweisen. Die Längsnut 1206 und Feder 1207 sind so symmetrisch zur Mittenebene angeordnet, dass identische Schalenteile 1201 bzw. 1202 auch anhand der Nut-Feder-Verbindung miteinander verbindbar sind. Die Verbindung von Längsnut 1206 und entsprechender Feder 1207 hat vor allem eine die Dichtheit gegen Partikelaustritt verstärkende Wirkung, insbesondere in Bezug auf die Krümmung im Umlenkbogen.

FIG.16 veranschaulicht schließlich als weiteren Aspekt eine mögliche Dichtung der stirnseitigen Endbereiche 1208A, 1208B an den Schalenteilen 1201, 1202. Ein senkrecht zur Längsachse gerichteter und umfänglich durchgehender Dichtvorsprung 1209A, mit einem zunächst zulaufenden und endseitig verdickten Querschnitt, z.B. ähnlich im einem Pilzkopf oder einem Spielstein, greift in eine innenliegende, entsprechend verlaufende Dichtnut 1209B am anderen stirnseitigen Endbereich 1208B. Der Dichtvorsprung 1209A greift in die Dichtnut 1209B form- und/oder kraftschlüssig ein.

Die in FIG.13 am besten erkennbare Fügestelle zwischen den Befestigungsbändern 1204 bildet auch hier die neutrale Faser.

**Bezugszeichenliste**

| | |
|---|---|
| FIG.1 | 322 Längsverstrebungen |
| 100 Leitungsführungseinrichtung | 331, 332 Schalenteile |
| 101 Obertrum | 333 Druckknöpfe |
| 103 Untertrum | 334 Aufnahmen |
| 104 Umlenkbogen | 335 Schnittstelle |
| 105 feststehende Anschlussstelle | 340 Trennstege |
| 107 relativbewegliche Anschlussstelle | B1 lichte axiale Breite (innen) |
| | B2 lichte axiale Breite (außen) |
| 110 Umhüllung | |
| A Umlenkachse | FIG.4A-4C: |
| | 400 Leitungsführungseinrichtung |
| | 408 Innenraum |
| FIG.2A-2C | 410 Wellschlauch |
| 200 Leitungsführungseinrichtung | 420 Wellentäler |
| 208 Innenraum | 440 Stützgerippe |
| 210 Umhüllung | 442 Träger |
| 211 Innenseite | 444 Querrippen |
| 212 Außenseite | 446 Fortsätze |
| 214 Wellenberge (außen) | |
| 215 Anschläge | FIG.5: |
| 216 Wellentäler (außen) | 500 Leitungsführungseinrichtung |
| 217 gegenüberliegendes Ende | 510 Wellschlauch |
| 218 Wellentäler (innen) | 540 Stützgerippe |
| 219 Verrastungsring | 542 Träger |
| 220 Wellenberge (innen) | |
| 222 Längsverstrebungen | FIG.6A-6C: |
| B1 lichte axiale Breite (innen) | 600 Leitungsführungseinrichtung |
| B2 lichte axiale Breite (außen) | 608 Innenraum |
| | 610 Umhüllung |
| FIG.3A-3D | 611 Innenseite |
| 300 Leitungsführungseinrichtung | 612 Außenseite |
| 308 Innenraum | 618 Wellentäler |
| 310 Umhüllung | 620 Wellenberge |
| 311 Innenseite | 640 Stützgerippe |
| 312 Außenseite | 642 Träger |
| 314 Wellenberge (außen) | 644, 645 Querrippen |
| 315 Anschläge | |
| 316 Wellentäler (außen) | FIG.7A-7C: |
| 318 Wellentäler (innen) | 700 Leitungsführungseinrichtung |
| 320 Wellentäler (innen) | 710 Umhüllung |
| 711 Innenseite | 1054 Befestigungsband |
| 712 Außenseite | |
| 731, 732 Schalenteile | FIG.11 : |
| 760 Leitungsführung | 1100 Leitungsführungseinrichtung |
| 762 Teilstück bzw. Glied | 1100A erster Längsabschnitt |
| 764 Seitenteil | 1100B zweiter Längsabschnitt |
| 766 Trägerband | 1100C dritter Längsabschnitt |
| 768 Befestigungsvorsprünge | 1110 Umhüllung |
| 769 Befestigungsmittel | 1131 Schalenteil |
| 770 Verbindungssteg | 1132 Schalenteil |
| 771, 772 T-förmige Stege | 1141 Wellschlauch |
| 775, 776 Längsstege | |
| 778 Verbinder | FIG.12-16: |
| | 1201 Schalenteil |
| | 1202 Schalenteil |
| FIG.8A-8B: | 1204 Befestigungsband |
| 800 Leitungsführungseinrichtung | 1205 Krampen |
| 810 Umhüllung | 1206 Längsnut |
| 880 Anschlussflansch | 1207 Feder |
| 881, 882 Klemmschalen | 1208A, 1208B stirnseitiger Endbereich |
| 883 Schnapphaken | |
| 884 Aussparungen | |
| 887 Durchgangsöffnungen | 1209A Dichtvorsprung |
| 888 Verbindungsschrauben | 1209B Dichtnut |
| 885, 886 Endbereiche | |
| 890 Durchführdichtung | |
| | |
| FIG.9A-9C: | |
| 940 Stützgerippe | |
| 941 Modul | |
| 942 Trägerstrang | |
| 943A, 943B Clipverbinder | |
| 944 Querrippe | |
| 947 Haltearm | |
| 948A, 948B Vorsprung | |
| 949 Aussparung | |
| | |
| FIG.10A-10C: | |
| 1031, 1032 Schalenteil | |
| 1037 Stirnende | |
| 1040 Trennsteg | |
| 1051, 1052 Verbinder | |
| 1053 Lochleiste | |

## Patentansprüche

1. Leitungsführungseinrichtung (300; 1100) für Leitungen, wie z.B. Kabel, Schläuche oder dergleichen, wobei die Leitungsführungseinrichtung ein erstes Ende zum Befestigen an einer feststehenden Anschlussstelle (105) und zweites Ende zum Befestigen an einer relativbeweglichen Anschlussstelle (107) aufweist und zwischen den Enden ein Obertrum (101), einen verfahrbaren Umlenkbogen (104) und ein Untertrum (103) bildet, wobei der Umlenkbogen um eine Umlenkachse (A) gekrümmt ist; und wobei die Leitungsführungseinrichtung eine biegsame Umhüllung (310; 1100) aufweist, und die Umhüllung einen Innenraum staubdicht umgibt, und wobei
die Umhüllung (310; 1110) in der Art eines Wellschlauchs ausgeführt ist und ein Wellprofil aufweist, welches der Biegsamkeit dient; **dadurch gekennzeichnet,**
**dass** die Umhüllung (310; 1110) zumindest in einem Längsabschnitt asymmetrisches Biegeverhalten in Bezug auf Krümmung um die Umlenkachse und auf entgegengesetzte Krümmung aufweist derart, dass die zugelassene Durchbiegung im Vergleich zur gewünschten Krümmung erheblich geringer ist, wobei die wellschlauchartige Umhüllung an einer Außenseite (312) ihres Umfangs ein anderes Wellprofil aufweist, als an einer der Umlenkachse zugewandten Innenseite (311) ihres Umfangs; und
**dass** die wellschlauchartige Umhüllung (310; 1110) abschnittsweise aus zwei Schalenteilen (331, 332; 1131, 1132) mit unterschiedlichen Wellprofilen zusammengesetzt ist.

2. Leitungsführungseinrichtung nach Anspruch 1, **dadurch gekennzeichnet, dass** die wellschlauchartige Umhüllung an der Außenseite (312) ein Wellprofil aufweist mit Wellentälern (316), deren lichte axiale Breite weniger als 20% der axialen Breite der Wellenberge beträgt,
wobei die wellschlauchartige Umhüllung an der Innenseite (311) ein Wellprofil aufweist mit Wellentälern (318) deren lichte axiale Breite mindestens 50% der axialen Breite der Wellenberge (320) beträgt.

3. Leitungsführungseinrichtung nach Anspruch 1 oder 2, **dadurch gekennzeichnet, dass** das Wellprofil der Außenseite eine Omega-Form aufweist, mit Wellenbergen (314), die zu den Enden hin ausgebauchte Flanken (315) aufweisen, und so gestaltet ist, dass diese Flanken in Strecklage der Umhüllung beidseitig miteinander im Anschlag stehen.

4. Leitungsführungseinrichtung nach einem der Ansprüche 1 bis 3,
**dadurch gekennzeichnet, dass** die Schalenteile (1201; 1202) an beiden Längsseiten jeweils ein in Längsrichtung verlaufendes Befestigungsband (1204) haben, welches eine Verzahnung mit Krampen (1205) aufweist die mit einer entsprechenden Verzahnung an einem gegenüberliegenden Schalenteil zusammenwirkt, wobei die Fügestelle zwischen den Befestigungsbändern die neutrale Faser der
Leitungsführungseinrichtung bildet.

5. Leitungsführungseinrichtung nach einem der Ansprüche 1 bis 3,
**dadurch gekennzeichnet, dass** die Schalenteile (331, 332; 1201, 1202) einstückig aus flexiblem Kunststoff hergestellt sind und im Längsschnitt ein Wellprofil aufweist mit asymmetrischem Biegeverhalten in Bezug auf eine Krümmung um eine Umlenkachse und auf eine entgegengesetzte Biegung derart, dass die zugelassene Biegung im Vergleich zur gewünschten Krümmung erheblich geringer ist; wobei das Schalenteil (331, 332; 1201, 1202) ein Wellprofil aufweist in Omega-Form, mit Wellenbergen (214; 314), die zu den Enden hin ausgebauchte Flanken (315) aufweisen, und das Wellprofil so gestaltet ist, dass diese Flanken in Strecklage beidseitig miteinander im Anschlag stehen

6. Leitungsführungseinrichtung nach einem der Ansprüche 1 bis 3,
**dadurch gekennzeichnet, dass** die Schalenteile (331, 332; 1201, 1202) an beiden Längsseiten ein in Längsrichtung verlaufendes Befestigungsband aufweisen und die Fügestelle zwischen den Befestigungsbändern die neutrale Faser der Leitungsführungseinrichtung bildet.

7. Schalenteil zum Herstellen einer Leitungsführungseinrichtung für Leitungen, wie z.B. Kabel, Schläuche oder dergleichen, welche eine wellschlauchartige Umhüllung bildet und abschnittsweise aus jeweils zwei gegenüberliegenden Schalenteilen (331, 332; 1201, 1202) zusammengesetzt ist, **dadurch gekennzeichnet, dass** das Schalenteil (331, 332; 1201, 1202) einstückig aus flexiblem Kunststoff hergestellt ist und im Längsschnitt ein Wellprofil aufweist mit asymmetrischem Biegeverhalten in Bezug auf eine Krümmung um eine Umlenkachse und auf eine entgegengesetzte Biegung derart, dass die zugelassene Biegung im Vergleich zur gewünschten Krümmung erheblich geringer ist;
wobei das Schalenteil (331, 332; 1201, 1202) ein Wellprofil aufweist in Omega-Form, mit Wellenbergen (314), die zu den Enden hin ausgebauchte Flanken (315) aufweisen, und das Wellprofil so gestaltet ist, dass diese Flanken in Strecklage beidseitig miteinander im Anschlag stehen.

8. Schalenteil zum Herstellen einer Leitungsführungseinrichtung für Leitungen, wie z.B. Kabel, Schläuche oder dergleichen, welche eine wellschlauchartige Umhüllung bildet und abschnittsweise aus jeweils zwei gegenüberliegenden Schalenteilen (1201; 1202) zusammengesetzt ist, **dadurch gekennzeichnet, dass** das Schalenteil (1201; 1202) im Längsschnitt ein Wellprofil aufweist mit asymmetrischem Biegeverhalten in Bezug auf eine Krümmung um eine Umlenkachse und auf eine entgegengesetzte Biegung und an beiden Längsseiten ein in Längsrichtung verlaufendes Befestigungsband (1204) hat, welches eine Verzahnung mit Krampen (1205) aufweist die mit einer entsprechenden Verzahnung an einem gegenüberliegenden Schalenteil zusammenwirkt.

9. Schalenteil nach Anspruch 8, wobei die Krampen (1205) einen Wirkungsquerschnitt haben, der zumindest annähernd der Form eines gleichschenkligen Trapezes entspricht, und wobei eine schmale Seite eines trapezförmigen Krampen (1205) von dem zu verbindenden Schalenteil abgewandt ist und zulaufende Schenkel der trapezförmigen Krampen (1205) bei verbundenen Teilen miteinander verkeilen.

10. Schalenteil nach Anspruch 8 oder 9, wobei die Krampen (1205) Vorsprünge in Verlängerung des Befestigungsbands seitlich nach außen in Richtung senkrecht zur Längsrichtung des Schalenteils bilden.

11. Schalenteil nach Anspruch 8, wobei die Verzahnung mit Krampen (1205) in der Art eines Reißverschlusses mit einer entsprechenden Verzahnung an einem gegenüberliegenden Schalenteil zusammenwirkt.

12. Schalenteil nach einem der Ansprüche 8 bis 11, wobei eine Längsnut (1206) vorgesehen ist, welche mit einer entsprechenden Feder am zu verbindenden Schalenteil formschlüssig zusammenwirkt.

13. Schalenteil nach einem der Ansprüche 8 bis 11, wobei eine Feder (1207) vorgesehen ist, welche mit einer entsprechenden Längsnut am zu verbindenden Schalenteil formschlüssig zusammenwirkt.

14. Schalenteil nach einem der Ansprüche 7 bis 13, wobei, an einem stirnseitigen Endbereich (1208A) ein senkrecht zur Längsachse gerichteter und umfänglich durchgehender Dichtvorsprung (1209A) und am anderen stirnseitigen Endbereich (1208B) eine innenliegende, entsprechend verlaufende Dichtnut (1209B) vorgesehen ist, in welche der Dichtvorsprung (1209A) des in Längsrichtung benachbarten form- und/oder kraftschlüssig eingreifen kann; und wobei der Dichtvorsprung (1209A) mit einem zunächst zulaufenden und endseitig verdickten Querschnitt ausgeführt ist.

15. Leitungsführungseinrichtung nach einem der vorherhegenden Ansprüche 1 bis 5, **dadurch gekennzeichnet, dass** die Umhüllung (210... 610) selbst die Leitungen führt und trägt und die wellschlauchartige Umhüllung (210... 610) im Vergleich zur gewünschten konkaven Krümmung um die Umlenkachse nur eine sehr geringe oder im Wesentlichen keine konvexe Durchbiegung gestattet.

16. Leitungsführungseinrichtung nach einem der vorherhegenden Ansprüche 1 bis 5, **dadurch gekennzeichnet, dass** die Umhüllung (210... 610) aus einem elastischen und dauerbiegefesten Kunststoff hergestellt ist.

17. Leitungsführungseinrichtung nach einem der vorherhegenden Ansprüche 1 bis 5, **dadurch gekennzeichnet,**
**dass** die statische konvexe Durchbiegung auf einen Radius begrenzt ist, welcher um ein Vielfaches größer ist, als der statische Biegeradius der wellschlauchartigen Umhüllung bei konkaver Krümmung.

18. Leitungsführungseinrichtung nach einem der vorherhegenden Ansprüche 1 bis 5, **dadurch gekennzeichnet dass** die Umhüllung (210... 610) ein asymmetrisches Biegeverhalten, mit an der Außenseite (212... 612) ihres Umfangs bezogen auf die Umlenkachse, einer geringeren Stauchbarkeit, als an der Innenseite (211... 611) ihres Umfangs, aufweist.

19. Leitungsführungseinrichtung nach einem der vorherhegenden Ansprüche 1 bis 5, **dadurch gekennzeichnet dass** eine geringere axiale Stauchbarkeit der Umhüllung (210... 610) im Querschnitt über einen Anteil des äußeren Umfangsbereichs realisiert ist, welcher zwischen 1/4 und 1/2 des vollen Umfangsmaßes der Umhüllung beträgt.

20. Leitungsführungseinrichtung (1100) nach einem der vorherhegenden Ansprüche 1 bis 5, **dadurch gekennzeichnet, dass** die Umhüllung (1110) in einem ersten Längsabschnitt (1100A) asymmetrisches Biegeverhalten und in einem zweiten Längsabschnitt (1100B) ein entgegengesetzt asymmetrisches Biegeverhalten aufweist.

21. Leitungsführungseinrichtung (1100) nach einem der vorherhegenden Ansprüche 1 bis 5, **dadurch gekennzeichnet, dass** die Umhüllung (1100) in einem Längsabschnitt (1100A; 1100B) asymmetrisches Biegeverhalten und in einem anderen Längsabschnitt (1100C) ein symmetrisches Biegeverhalten aufweist.

## Claims

1. A line guide device (300; 1100) for lines like for example cables, hoses or the like, wherein the line guide device has a first end for fixing to a stationary connecting location (105) and a second end for fixing to a relatively moveable connecting location (107) and between the ends forms an upper run (101), a displaceable direction-changing curve (104) and a lower run (103), wherein the direction-changing curve is curved about a direction-changing axis (A), and wherein the line guide device has a flexible sheath (310; 1100) and the sheath dust-tightly surrounds an internal space, and wherein
the sheath (310; 1100) is designed in the manner of a corrugated tube and has a corrugated profile which serves for flexibility,
**characterised in that** the sheath (310; 1100) at least in a longitudinal portion has an asymmetric bending behaviour in relation to curvature about the direction-changing axis and to opposite curvature in such a way that the permitted bending sag is considerably less in comparison with the desired curvature, wherein at an outside (312) of its periphery the corrugated tube-like sheath has a different corrugated profile than at an inside (311) of its periphery, that faces towards the direction-changing axis and
**in that** the corrugated tube-like sheath (310; 1110) is composed portion-wise of two shell portions (331; 332; 1131, 1132) with different corrugated profiles.

2. A line guide device as set forth in claim 1 **characterised in that** at the outside (312) the corrugated tube-like sheath has a corrugated profile with corrugation troughs (316) whose internal axial width is less than 20% of the axial width of the corrugation peaks,
wherein at the inside (311) the corrugated tube-like sheath has a corrugated profile with corrugation troughs (318) whose internal axial width is at least 50% of the axial width of the corrugation peaks (320).

3. A line guide device as set forth in claim 1 or claim 2 **characterised in that** the corrugated profile of the outside is of an omega shape, with corrugation peaks (314) having flanks (315) which are bulged out towards the ends, and which is of such a configuration that said flanks in the straight position of the sheath are in abutting contact with each other at both sides.

4. A line guide device as set forth in one of the claims 1 to 3, **characterised in that** the shell portions (1201; 1202) each have at both longitudinal sides a fixing band (1204) extending in the longitudinal direction, which has a tooth arrangement with teeth (1205), which cooperates with a corresponding tooth arrangement on an oppositely disposed shell portion, wherein the join between the fixing bands forms the neutral fibre of the line guide device.

5. A line guide device as set forth in one of the claims 1 to 3, **characterised in that** the shell portions (331, 332; 1201, 1202) are made in one piece from flexible plastic and in longitudinal section have a corrugated profile with an asymmetric bending characteristic in relation to a curvature about a direction-changing axis and to an opposite bending such that the permitted bending is considerably less in comparison with the desired curvature, wherein the shell portions (331, 332; 1201, 1202) have a corrugated profile of omega shape, with corrugation peaks (214; 314) having flanks (315) which are bulged out towards the ends and the corrugated profile is of such a configuration that said flanks are in abutting contact with each other at both sides in the straight position.

6. A line guide device as set forth in one of the claims 1 to 3, **characterised in that** the shell portions (331, 332; 1201, 1202) have at both longitudinal sides a fixing band which extends in the longitudinal direction and the join between the fixing bands forms the neutral fibre of the line guide device.

7. A shell portion for the production of a line guide device for lines like for example cables, hoses or the like, which forms a corrugated tube-like sheath and is portion-wise composed of two respective oppositely disposed shell portions (331, 332; 1201, 1202),
**characterised in that**
the shell portion (331, 332; 1201, 1202) is made in one piece from flexible plastic and in longitudinal section has a corrugated profile with an asymmetric bending characteristic in relation to a curvature about a direction-changing axis and to an opposite bending such that the permitted bending is considerably less in comparison with the desired curvature,
wherein the shell portion (331, 332; 1201, 1202) has a corrugated profile of omega shape, with corrugation peaks (214; 314) having flanks (215; 315) which are bulged out towards the ends and the corrugated profile is of such a configuration that said flanks are in abutting contact with each other at both sides in the straight position.

8. A shell portion for the production of a line guide device for lines like for example cables, hoses or the like, wherein the line guide device forms a corrugated tube-like sheath and is portion-wise composed of two respective oppositely disposed corrugated tube-like shell portions (1201; 1202), **characterised in that** the shell portion (1201; 1202) in longitudinal section has a corrugated profile with an asymmetric bending characteristic in relation to a curvature about a direction-changing axis and to an opposite bending, and at both longitudinal sides has a fixing band (1204) which extends in the longitudinal direction and which has a tooth arrangement with teeth (1205), which cooperates with a corresponding tooth arrangement on an oppositely disposed shell portion.

9. A shell portion as set forth in claim 8 wherein the teeth (1205) are of an operative cross-section which at least approximately corresponds to the shape of an isosceles trapezium, and wherein a narrow side of a trapezoidal tooth (1205) faces away from the shell portion to be connected and converging limbs of the trapezoidal teeth (1205) wedge together when the parts are connected.

10. A shell portion as set forth in one of claims 8 or 9 wherein the teeth (1205) form projections as a prolongation of the fixing band laterally outwardly in a direction perpendicularly to the longitudinal direction of the shell portion.

11. A shell portion as set forth in claim 8, wherein the tooth arrangement with teeth (1205) cooperates with a corresponding tooth arrangement on an oppositely disposed shell portion in the manner of a zip fastener.

12. A shell portion as set forth in one of claims 8 to 11 wherein there is provided a longitudinal groove (1206) cooperating in positively locking relationship with a corresponding tongue on the shell portion to be connected.

13. A shell portion as set forth in one of claims 8 to 11 wherein there is provided a tongue (1207) which cooperates in positively locking relationship with a corresponding longitudinal groove on the shell portion to be connected.

14. A shell portion as set forth in one of claims 7 to 13 wherein provided at an face-side end region (1208A) is a sealing projection (1209A) which is directed perpendicularly to the longitudinal axis and which is peripherally continuous and provided at the other face-side end region (1208B) is an inwardly disposed, correspondingly extending sealing groove (1209B) into which the sealing projection (1209A) of the part adjacent in the longitudinal direction can engage in positively locking and/or force locking relationship; and wherein the sealing projection (1209A) has an initially converging cross-section which is thickened at the end.

15. A line guide device as set forth in one of the preceding claims 1 to 5, **characterised in that** the sheath (210... 610) itself guides and carries the lines and in comparison with the desired concave curvature about the direction-changing axis the corrugated tube-like sheath (210...610) permits only a very slight or substantially no convex bending sag.

16. A line guide device as set forth in one of the preceding claims 1 to 5, **characterised in that** the sheath (210... 610) is made from an elastic plastic having long-term bending strength.

17. A line guide device as set forth in one of the preceding claims 1 to 5, **characterised in that** the static convex bending sag is limited to a radius which is a multiple greater than the static bending radius of the corrugated tube-like sheath upon concave curvature.

18. A line guide device as set forth in one of the preceding claims 1 to 5, **characterised in that** the sheath (210... 610) has an asymmetric bending characteristic with a lower degree of compressibility at the outside (212... 612) of its periphery with respect to the direction-changing axis, than at the inside (211... 611) of its periphery.

19. A line guide device as set forth in one of the preceding claims 1 to 5, **characterised in that** a lesser axial compressibility of the sheath (210... 610) is afforded in the cross-section over a portion of the outer peripheral region that between 1/4 and 1/2 of the full peripheral extent of the sheath.

20. A line guide device (1100) as set forth in one of the preceding claims 1 to 5, **characterised in that** the sheath (1110) has an asymmetric bending characteristic in a first longitudinal portion (1100A) and an oppositely asymmetric bending characteristic in a second longitudinal portion (1100B).

21. A line guide device as set forth in one of the preceding claims 1 to 5, **characterised in that** the sheath (1100) has an asymmetric bending characteristic in a longitudinal portion (1100A; 1100B) and a symmetrical bending characteristic in another longitudinal portion (1100C).

## Revendications

1. Dispositif de guidage de ligne (300; 1100) pour des lignes comme par exemple des câbles, des tuyaux ou similaires, dans lequel le dispositif de guidage de ligne présente une première extrémité pour la fixation à un point de raccordement fixe (105) et une deuxième extrémité pour la fixation à un point de raccordement relativement mobile (107) et forme entre les extrémités un tronçon supérieur (101), une courbe de changement de direction déplaçable (104) et un tronçon inférieur (103), dans lequel la courbe de changement de direction est courbée autour d'un axe de changement de direction (A), et dans lequel le dispositif de guidage de ligne présente une gaine flexible (310); 1100) et la gaine entoure de manière étanche à la poussière un espace interne, et dans lequel
la gaine (310; 1100) est conçue à la manière d'un tube ondulé et présente un profil ondulé qui sert à la flexibilité, **caractérisé en ce que** la gaine (310; 1100) présente, au moins dans une portion longitudinale, un comportement de flexion asymétrique par rapport à la courbure autour de l'axe de changement de direction et à la courbure opposée, de telle sorte que l'affaissement de flexion permis est nettement inférieur à la courbure souhaitée, la gaine tubulaire ondulée présentant, sur une face extérieure (312) de sa périphérie, un profil ondulé différent de celui d'une face intérieure (311) de sa périphérie tournée vers l'axe de changement de direction et
**en ce que** la gaine tubulaire ondulée (310; 1110) est composée par portions de deux parties de coque (331; 332; 1131, 1132) ayant des profils ondulés différents.

2. Dispositif de guidage de ligne selon la revendication 1, **caractérisé en ce que** la gaine tubulaire ondulée présente à l'extérieur (312) un profil ondulé avec des creux d'ondulation (316) dont la largeur axiale interne est inférieure à 20% de la largeur axiale des pics d'ondulation,
la gaine tubulaire ondulée présentant à l'intérieur (311) un profil ondulé avec des creux d'ondulation (318) dont la largeur axiale interne est au moins égale à 50% de la largeur axiale des sommets d'ondulation (320).

3. Dispositif de guidage de ligne selon la revendication 1 ou la revendication 2, **caractérisé en ce que** le profil ondulé de l'extérieur est en forme d'oméga, avec des pics d'ondulation (314) ayant des flancs (315) qui sont bombés vers les extrémités, et qui est d'une configuration telle que lesdits flancs, dans la position droite de la gaine, sont en contact de butée les uns avec les autres des deux côtés.

4. Dispositif de guidage de ligne selon l'une des revendications 1 à 3, **caractérisé en ce que** les parties de coque (1201; 1202) présentent chacune sur les deux côtés longitudinaux une bande de fixation (1204) s'étendant dans la direction longitudinale, qui présente une denture avec des dents (1205), qui coopère avec une denture correspondante sur une partie de coque opposée, la liaison entre les bandes de fixation formant la fibre neutre du dispositif de guidage de ligne.

5. Dispositif de guidage de ligne selon l'une des revendications 1 à 3, **caractérisé en ce que** les parties de coque (331, 332; 1201, 1202) sont fabriquées d'une seule pièce en matière plastique flexible et présentent en coupe longitudinale un profil ondulé avec une caractéristique de flexion asymétrique par rapport à une courbure autour d'un axe de changement de direction et à une courbure opposée, de telle sorte que la flexion permise est nettement inférieure à la courbure souhaitée, les parties de coque (331, 332; 1201, 1202) ont un profil ondulé en forme d'oméga, avec des pics d'ondulation (214; 314) ayant des flancs (315) qui sont bombés vers les extrémités et le profil ondulé est d'une configuration telle que lesdits flancs sont en contact de butée les uns avec les autres des deux côtés en position droite.

6. Dispositif de guidage de ligne selon l'une des revendications 1 à 3, **caractérisé en ce que** les parties de coque (331, 332; 1201, 1202) présentent sur les deux côtés longitudinaux une bande de fixation qui s'étend dans la direction longitudinale et la jonction entre les bandes de fixation forme la fibre neutre du dispositif de guidage de ligne.

7. Partie de coque pour la fabrication d'un dispositif de guidage de ligne pour des lignes comme par exemple des câbles, des tuyaux ou similaires, qui forme une gaine tubulaire ondulée et qui est composée par portions de deux parties de coque (331, 332; 1201, 1202) respectivement opposées,
**caractérisé en ce que**
la partie de coque (331, 332; 1201, 1202) est fabriquée d'une seule pièce en matière plastique souple et présente en coupe longitudinale un profil ondulé avec une caractéristique de flexion asymétrique par rapport à une courbure autour d'un axe de changement de direction et à une flexion opposée telle que la flexion permise est nettement inférieure par rapport à la courbure souhaitée,
la partie de coque (331, 332; 1201, 1202) ayant un profil ondulé en forme d'oméga, avec des pics d'ondulation (214; 314) ayant des flancs (215; 315) qui sont bombés vers les extrémités et le profil ondulé est d'une telle configuration que lesdits flancs sont en contact de butée les uns avec les autres des deux côtés en position droite.

8. Partie de coque pour la fabrication d'un dispositif de guidage de ligne pour des lignes comme par exemple des câbles, des tuyaux ou similaires, le dispositif de guidage de ligne formant une gaine tubulaire ondulée et étant composé par portions de deux parties de coque tubulaires ondulées (1201; 1202) opposées, **caractérisée en ce que** la partie de coque (1201; 1110) présente en coupe longitudinale un profil ondulé avec une caractéristique de flexion asymétrique par rapport à une courbure autour d'un axe de changement de direction et à une flexion opposée, et présente sur les deux côtés longitudinaux une bande de fixation (1204) qui s'étend dans la direction longitudinale et qui présente une denture avec des dents (1205), qui coopère avec une denture correspondante sur une partie de coque opposée.

9. Partie de coque selon la revendication 8, dans laquelle les dents (1205) ont une section transversale active qui correspond au moins approximativement à la forme d'un trapèze isocèle, et dans laquelle un côté étroit d'une dent trapézoïdale (1205) est tourné à l'opposé de la partie de coque à relier et les branches convergentes des dents trapézoïdales (1205) se calent ensemble lorsque les pièces sont reliées.

10. Partie de coque selon l'une des revendications 8 ou 9, dans laquelle les dents (1205) forment des saillies dans le prolongement de la bande de fixation, latéralement vers l'extérieur dans une direction perpendiculaire à la direction longitudinale de la partie de coque.

11. Partie de coque selon la revendication 8, dans laquelle la denture avec des dents (1205) coopère avec une denture correspondante sur une partie de coque opposée à la manière d'une fermeture à glissière.

12. Partie de coque selon l'une des revendications 8 à 11, dans laquelle il est prévu une rainure longitudinale (1206) coopérant en relation de verrouillage positif avec une languette correspondante sur la partie de coque à relier.

13. Partie de coque selon l'une des revendications 8 à 11, dans laquelle est prévue une languette (1207) qui coopère en relation de verrouillage positif avec une rainure longitudinale correspondante sur la partie de coque à assembler.

14. Partie de coque selon l'une des revendications 7 à 13, dans laquelle il est prévu, dans une zone d'extrémité frontale (1208A), une saillie d'étanchéité (1209A) dirigée perpendiculairement à l'axe longitudinal et continue sur la périphérie et, dans l'autre zone d'extrémité frontale (1208B), une rainure d'étanchéité (1209B) située à l'intérieur et s'étendant de manière correspondante, la saillie d'étanchéité (1209A) de la partie voisine dans la direction longitudinale pouvant s'engager par complémentarité de forme et/ou par force; et la saillie d'étanchéité (1209A) ayant une section transversale initialement convergente qui est épaissie à l'extrémité.

15. Dispositif de guidage de ligne selon l'une des revendications précédentes 1 à 5, **caractérisé en ce que** la gaine (210...610) guide et porte elle-même les lignes et, par rapport à la courbure concave souhaitée autour de l'axe de changement de direction, la gaine tubulaire ondulée (210...610) ne permet qu'un affaissement de flexion très faible ou pratiquement pas d'affaissement de flexion convexe.

16. Dispositif de guidage de ligne selon l'une des revendications précédentes 1 à 5, **caractérisé en ce que** la gaine (210...610) est fabriquée en une matière plastique élastique ayant une résistance à la flexion à long terme.

17. Dispositif de guidage de ligne selon l'une des revendications précédentes 1 à 5, **caractérisé en ce que** l'affaissement de flexion convexe statique est limité à un rayon qui est un multiple plus grand que le rayon de flexion statique de la gaine tubulaire ondulée lors d'une courbure concave.

18. Dispositif de guidage de ligne selon l'une des revendications précédentes 1 à 5, **caractérisé en ce que** la gaine (210... 610) présente une caractéristique de flexion asymétrique avec un degré de compressibilité plus faible à l'extérieur (212... 612) de sa périphérie par rapport à l'axe de changement de direction, qu'à l'intérieur (211... 611) de sa périphérie.

19. Dispositif de guidage de ligne selon l'une des revendications précédentes 1 à 5, **caractérisé en ce qu'**une compressibilité axiale moindre de la gaine (210... 610) est prévue en section transversale sur une partie de la région périphérique extérieure, sur entre un quart et la moitié de l'étendue périphérique totale de la gaine.

20. Dispositif de guidage de ligne (1100) selon l'une des revendications précédentes 1 à 5, **caractérisé en ce que** la gaine (1110) présente une caractéristique de flexion asymétrique dans une première portion longitudinale (1100A) et une caractéristique de flexion asymétrique opposée dans une deuxième portion longitudinale (1100B).

21. Dispositif de guidage de ligne selon l'une des revendications précédentes 1 à 5, **caractérisé en ce que** la gaine (1100) présente une caractéristique de flexion asymétrique dans une portion longitudinale (1100A; 1100B) et une caractéristique de flexion symétrique dans une autre portion longitudinale (1100C).
